# EUROPEAN PATENT SPECIFICATION

(11) **EP 4 552 083 B1**
(45) Date of publication and mention of the grant of the patent: **02.09.2026**
(21) Application number: 23738033.2
(22) Date of filing: 04.07.2023
(51) Int. Cl.: G06T 7/80

(54) **CALIBRATION METHOD FOR SURVEY INSTRUMENT AND SYSTEM FOR CALIBRATING A SURVEY INSTRUMENT**
KALIBRIERUNGSVERFAHREN FÜR EIN VERMESSUNGSINSTRUMENT UND SYSTEM ZUR KALIBRIERUNG EINES VERMESSUNGSINSTRUMENTS
PROCÉDÉ D'ÉTALONNAGE POUR INSTRUMENT D'ÉTUDE ET SYSTÈME D'ÉTALONNAGE D'UN INSTRUMENT D'ÉTUDE

(30) Priority: 05.07.2022 NL 2032374
(43) Date of publication of application: 14.05.2025
(73) Proprietor: FNV IP B.V., 2264 SG Leidschendam (NL)
(72) Inventor: DE BIJL, Mario, 2264 SG Leidschendam (NL); VAN WEEREN, Dennis, 2264 SG Leidschendam (NL); BUGGENHOUT, Nicolas, 2264 SG Leidschendam (NL)
(74) Representative: FNV Intellectual Property
(86) International application number: PCT/EP2023/068392
(87) International publication number: WO 2024/008716

(56) References cited:
- RAMALINGAM S ET AL: "Generic self-calibration of central cameras", COMPUTER VISION AND IMAGE UNDERSTANDING, ACADEMIC PRESS, US, vol. 114, no. 2, 1 February 2010 (2010-02-01), pages 210 - 219, XP026871176, ISSN: 1077-3142, [retrieved on 20090831]
- EVGENIY MARTYUSHEV: "Self-Calibration of Cameras with Euclidean Image Plane in Case of Two Views and Known Relative Rotation Angle", ARXIV.ORG, CORNELL UNIVERSITY LIBRARY, 201 OLIN LIBRARY CORNELL UNIVERSITY ITHACA, NY 14853, 30 July 2018 (2018-07-30), XP081119940, DOI: 10.1007/978-3-030-01225-0_26

## Description

### Field of the invention

The present invention relates to a method for calibrating a camera of a computer vision system, in particular a camera of a survey instrument, wherein the camera is provided with a diffractive aperture as objective. The invention may further relate to a system or set-up for calibrating the camera. Unlocking insights from Geo-Data, the present invention further relates to improvements in sustainability and environmental developments: together we create a safe and liveable world.

### Background art

Systems and methods for measuring locations of remote objects are known for a long time, e.g. in the fields of surveying and/or monitoring of structures. Conventionally, cameras of such systems use lenses, or refractive optical elements, in the camera objective.

WO 2019/143249 A1, WO 2019/143250 A1 and WO 2021/167452 A2 disclose apparatuses and methods for monitoring locations of an object, e.g. a structure, over time. The disclosed systems comprise beacons or targets which are located on the object, and which are monitored by a camera such as to detect changes or variations in the positions of the targets over time.

WO 2019/143250 A1 and WO 2021/167452 A2 disclose systems using a non-refractive optical element, such as a pinhole, as camera objective. This has been observed to provide a number of advantages over lens-based camera systems, including reduced optical distortions, improved depth of field, and reduced thermal sensitivity. For such systems, the thermal sensitivity, e.g. caused by thermal expansion, has been seen to be mainly influenced by the thermal expansion coefficient of the housing of the camera, and not by thermal effects in the objective as such, which would be the case for lens-based systems.

Ramalingam S et. al, "Generic self-calibration of central cameras", Computer Vision and Image Understanding Academic Press, US, Vol. 114, No. 2, 1 Feb. 2010, pages 210-219 describes generic self-calibration of central cameras considering specific camera motions.

However, the observation accuracy of a camera-based survey instrument suffers not only from temperature dependent shrinking and expansion of the camera housing and other components of the camera, but is also influenced by mechanical fabrication tolerances like the position of the lens or aperture relative to the optical sensor.

Therefore, like other measurement systems, also systems using non-refractive optical elements, or diffractive apertures, as camera objective, need to be calibrated in order to provide accurate measurement results. The deviations of physical parameters from the expected values, causing observation errors, can be compensated for by calibration.

Conventional survey instrument calibration methods have however shown unsatisfactory, as these are directed to compensating mainly for optical errors in the lenses. With conventional calibration methods, the instrument under calibration observes a scene with defined measurement points. With these methods, at least one of the following requirements must be met:
- The locations of the measurement points in the scene with respect of the survey instrument must be known accurately;
- The mutual directions of the measurement points must be known accurately.

Conventional calibration methods thus require precisely known absolute positions of many points in a pattern located in the field of view of the survey instrument, or precisely known directions to many points in a scene. This means that in order to achieve very high precision for the calibrated instrument the patterns themselves also need to be calibrated to very high precision. This is difficult to achieve.

Further, conventional methods are designed to calibrate a lens based optical system which has its own set of dynamic errors limiting the ultimate precision that can be achieved. These errors are not present, or at least differ to a substantial degree, in survey systems using objectives based on non-refractive optical elements or diffractive apertures instead of a lens.

The presence of such errors has a detrimental effect on the accuracy and resulting uncertainty of monitoring structures. As a result of these uncertainties, structures may be subject to early maintenance projects, or overparameterization during design phase, without those being strictly necessary. This may have a negative environmental impact. In addition, in cases where measurement results show less movement than there actually, such underestimation of structural health may also have significant safety consequences.

A diffractive aperture based camera is free of any lens based dynamic distortions, thereby enabling measuring positional change of targets to very high precision. However, to realize this high precision of the measurement, a very precise calibration method would be needed.

Therefore, there is a need to define calibration methods for diffractive aperture based survey instruments.

### Summary of the invention

The problem addressed by the present document involves providing a method and a system enabling calibration of a camera using non-refractive optical element, such as a diffractive aperture or pinhole, as camera objective for projecting an image onto the image sensor.

More specifically, it is an objective of the present invention to overcome the shortcomings of the prior art, and to allow calibration of a camera provided with a diffractive aperture for projecting an image onto the image sensor.

According to a first aspect of the present invention, a method is provided for calibrating a camera of a computer vision system, the camera comprising an image sensor and a diffractive aperture arranged for projecting light onto the image sensor, the method comprising the following steps:
(a) distributing a plurality of targets within a field of view of the camera;
(b) providing a camera model representing a mathematical model of the camera;
(c) positioning the camera in a first rotational position with respect to the targets and recording a first image of the plurality of targets with the camera in the first rotational position;
(d) determining a first set of calculated observation angles from the first image using the camera model, the first set of calculated observation angles comprising a first calculated observation angle of each target with respect to the camera;
(e) rotating the camera into a second rotational position with respect to the targets and recording a second image of the plurality of targets with the camera in the second rotational position;
(f) determining a second set of calculated observation angles from the second image using the camera model, the second set of calculated observation angles comprising a second calculated observation angle of each target with respect to the camera;
(g) determining a function or plot based on the first and/or second set of calculated observation angles and a set of differential angles, the differential angles representing a difference between the first and second calculated observation angles for each target;
(h) determining camera model errors from the function or plot;
(i) comparing the camera model errors to a predefined limit;
(j) if the camera model errors are lower than the limit, determining the camera model as being acceptable;
(k) if the camera model errors are not lower than the limit, calculating an updated camera model based on the camera model errors, and repeating steps d), f), g), h), i) and j) or k) based on the updated camera model.

The camera model comprises a mathematical representation of the camera, in particular a mathematical model including parameter values describing a relationship between the diffractive aperture and the pixels of the image sensor. As initial model, a mathematical model representing the design specification of the camera can be used. Alternatively, a camera model determined in a previous calibration can be used.

The method is an iterative method of calculating an updated, i.e. calibrated, camera model, wherein calculations are re-iterated until the camera model errors, or parameter offset values, are within a predefined limit or threshold.

The specific amount with which the camera is rotated between the two measurements, i.e., when moving from the first rotational position to the second rotational position, is not critical and does not need to be known. It is the measured change in observation angle for each target that forms the basis for the calculation of the calibration parameters.

The rotation from the first rotational position to the second rotational position preferably comprises a substantially purely rotational movement. However, due to for example the axis of rotation not being positioned at the nominal position of the diffractive aperture, the movement may include also a translational movement. The influence of the translational movement on the calibration results may be minimized by positioning the targets at a sufficiently large distance. Alternatively, the translation movement may be algorithmically determined and corrected for during the calibration process.

The order of the steps listed above is not essential, but could be altered as understood by a person skilled in the art. E.g., although step (d) of determining a first set of calculated observation angles is mentioned prior to the step (e) of rotating the camera into a second rotational position, the step of rotating into the second rotational position and recording the second image can be performed before determining the first and second sets of calculated observation angles.

In contrast to the conventional calibration methods, with the calibration method according to the present disclosure, no precisely known location or direction of a calibration pattern, such as a target array, is required. The method of calibration is based on the fact that the observed change in observation angle resulting from a rotation of the camera should be equal for all targets, irrespective of the direction or location of each target.

The optical axis of the camera is defined in the conventional manner. The optical axis of the camera can be represented by a virtual line passing through the centre of the diffractive aperture and being orthogonal to the plane of the image sensor.

Rotation from the first rotation position to the second rotational position is typically a rotation of approximately 1 gon, 1 degree, or a few degrees. Although the camera could in principle be rotated through a larger angle between the measurements, as will be described further herein below, it has been seen to be advantageous to have targets arranged close to the peripheries of the field of view of the camera. The amount of rotation should then be chosen such that targets at opposite peripheries are detected by the camera in both the first and second rotational positions.

The actual, or real, observation angle is generally defined as an angle of separation of the target with respect to the optical axis of the camera. That is, the observation angle can be defined as the angle formed between a virtual line extending from the target to a center of the aperture and the optical axis of the camera.

The calculated observation angle is the angle which is calculated using an algorithm taking as input the projection of the targets on the image sensor and the camera model. Such an algorithm may use techniques as outlined herein further below.

The actual observation angles and the calculated observation angles are not necessarily the same, but may differ due to errors in the camera model and the accuracy of the algorithm.

The rotation from the first rotational position to the second rotational position may be substantially within a horizontal plane.

The plurality of targets may be arranged with at least a portion thereof located within the horizontal plane.

As mentioned, the method according to the present disclosure is designed to calibrate a diffractive aperture based camera, such as a pinhole camera. The method can be applied in analogous manner to cameras using other types of diffractive apertures or non-refractive elements, such as those described in WO 2019/143250 A1 and WO 2021/167452 A2.

The method is not limited to use with cameras or instruments intended for surveying applications, but can equally find use in other computer vision systems, not only aimed at geodetic applications but also at a variety of other applications, for example systems for machine alignment of components.

The targets may be active targets or beacons, for example light emitting diodes, LEDs, which themselves emit light. Alternatively, the targets may be passive targets, such as conventional survey prisms, retro-reflectors, or hollow mirrors reflecting light emitted by the camera and/or by other light sources. The targets should be small enough such as to effectively be considered point sources when observed by the camera. The condition of the targets being effectively point sources sets a minimum distance between the camera and the targets during calibration measurements.

The camera generally further comprises a processing unit configured to determine the first and second observation angles, and the changes to the observation angles, i.e., the differences between the first and second observation angles for each target. The processing unit can be located within a camera housing, where also the image sensor is arranged, or external to the housing.

The camera is typically positioned on a rotation stage, which may be either a general purpose rotation stage or a tailor-made rotation stage, or on a tripod during the measurements, the rotation stage or tripod enabling rotation of the camera within a horizontal plane, and preferably also within a vertical plane, e.g., such as to be rotated from the first rotational position to the second rotational position.. The tripod may further enable tilt of the camera with respect to the horizontal plane.

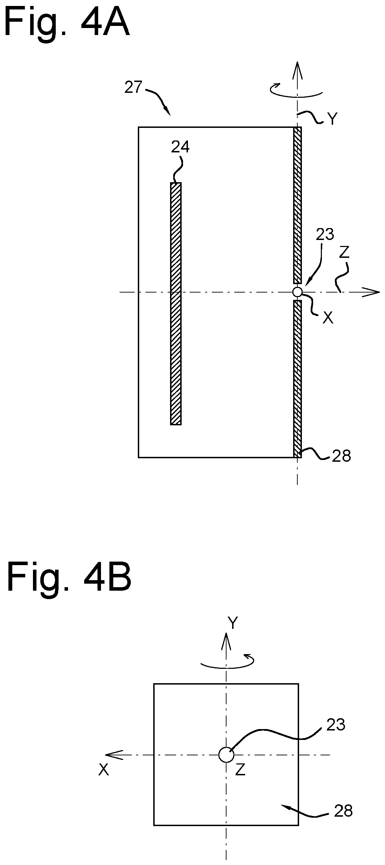

The different types of rotations and/or tilts of the camera between different positions where images are recorded, and the influences of deviations of the aperture position from its nominal position on the observation angles calculated from the recorded images will be described in more detail in the detailed described with respect to Figures 4A-4C.

The plurality of targets preferably comprises at least three targets. In general, the number of targets amount to around 10-20 targets, or even about 100 targets. The number of targets used may be set based on which processing time and/or processing load is considered acceptable.

The targets may be arranged all at substantially the same distance from the camera. This has the advantage that all targets can be mounted to a single constructional element, such as a beam or arc, and that all targets will appear with similar brightness on the image sensor.

However, it is not a requirement that all targets be arranged at the same distance from the camera. The method can be applied for a plurality of targets located at substantially any distance from the camera.

The following considerations may be made in respect of the distance between the targets and the camera: the targets may be preferably arranged at a distance at which they appear as substantially point sources, while still being close enough that the projection on the image sensor is sufficiently bright to be distinguished by the image processing algorithm. Further, the targets should be located at a minimum distance at which any errors in the calculated observation angles arising due to the center of rotation not being perfectly centered in the diffraction aperture are within acceptable limits.

The step of determining a function or plot based on the first and/or second set of calculated observation angles and a set of differential angles may comprise providing a graphical representation of the differential angles as a function of the first and/or second calculated observation angles, and/or determining a mathematical function of the differential angles with respect to of the first and/or second calculated observation angles. Such a function or plot maybe be determined using a curve fit and may be expressed as Δα = F(α₁), or, equivalently, Δα = F(α₂).

In the plot, generally the X-axis represents the calculated observation angle for each target at the first (α₁) or second (α₂) rotational position, and the Y-axis the differential angle, Δα, for each of the targets. The differential angles are calculated as the difference between the calculated observation angles for each target in the first rotational position and the second rotational position, i.e., Δα= α₁ - α₂ or analogously Δα= α₂ - α₁.

From the function or plot, camera model errors may be determined as offset values to one or more of the parameters of the camera model.

If the camera model is considered as providing a mathematical representation of the position of the diffractive aperture with respect to the image sensor expressed in a cartesian coordinate system, the coordinates of the pixels image sensor may be expressed in x, y, z, the nominal position of the center of the diffractive aperture taken as the origin. In such representation, the z axis is taken as the axis from the origin, along the optical axis through the nominal position of the aperture. The x and y axes are respectively parallel to the plane of the image sensor, and perpendicular to the z axis in accordance with the definition of a cartesian coordinate system. In general, the x axis may be within a horizontal plane and the y axis along a vertical direction.

Using such camera model, offsets in one or more of the x, y and z coordinates can be determined from the plot as follows:
- A linear (1^{st} order) component indicates an X offset error (when the movement from the first rotational position to the second rotational position is within the horizontal plane) and/or an Y offset error (when the movement from the first rotational position to the second rotational position is a rotation within a vertical plane).
- A quadratic (2^{nd} order) component indicates Z (focal) offset error.
- A flat plot indicates no X (Y) or Z errors. In this case, the calculated observation angles and the actual observation angles are all equal.

Numerical values of the camera model errors, or parameter offset values can be calculated from the 1^{st} and/or 2^{nd} order components.

If the calculated camera model errors are not within the predefined limit or threshold, these are fed back into the algorithm to provide an updated camera model. The calculational (or determination) steps are repeated, based on this updated camera model, until the camera model errors are within the limit.

Hence, the calculations are iterated until a converging result is obtained, where the camera model errors are smaller than the limit.

In the above described manner, calibration parameters in two dimensions, i.e. X and Z, or Y and Z, can be determined.

For many applications of the camera, in particular surveying applications, calibration in the horizontal direction is considered most important. For such applications, it could suffice to perform the above method with the rotation of the camera from the first rotational position to the second rotational position realized as a rotation within the horizontal plane, thereby calibrating the camera model in the horizontal direction. In this case, calibration could be performed in the field, relieving the need to dismount the camera from a monitoring location and bringing it to a laboratory space.

If calibration is to be performed along both the X and Y axis, the method can be performed in various manners.

According to a first version of the method, the method described above is performed with the movement from the first to the second rotational position being a rotation within the horizontal plane, and after the hence determined computer model errors converge to values within the preset limit, rotating the camera 90° around its optical axis, i.e., around the z axis, and repeating the method steps, again rotating the camera within the horizontal plane. According to this version, the camera model can be calibrated in x, y, z directions from four recorded images.

According to a second version of the method, the movement from the first rotational position to the second rotational position involves a rotation around two axis of rotation, enabling four sets of calculated observation angles, involving angles with respect to the x-axis and with respect to the y-axis, to be calculated from the two recorded images.

According to a third version of the method, the method described above is performed with the movement from the first to the second rotational position being realized by a rotation within the horizontal plane. Once the computer model errors converge to values within the preset limit, the camera is tilted in respect of the horizontal plane, i.e.., rotated around the x-axis (which extends in the horizontal plane), and the method repeated. According to this version, the camera model can be calibrated from three recorded images.

According to the first version of the method, the method may further comprise the steps of: once the camera model has been determined as being acceptable, rotating the camera substantially 90 degrees around its optical axis; and repeating steps c) to k).

By rotating, the camera 90° around its optical axis, even with the plurality of targets arranged in a one-dimensional array, the camera can be calibrated over the two-dimensional plane of the image sensor. This enables illustrating, or reducing, the three-dimensional position of the diffractive aperture with respect to the image sensor, as a two-dimensional problem.

Further advantages relate to the fact that the targets have to be placed only at the virtual horizon, as viewed by the camera when it is in the normal, non-tilted orientation.

After the rotation of substantially 90° around the optical axis, the steps c) to k) are repeated. After the 90° rotation, the camera can be considered as being positioned in a third rotational position, and the camera can be rotated within the horizontal plane into a fourth rotational position.

In other words, repeating steps c) to k) may be expressed as:
(c') positioning the camera in a third rotational position with respect to the targets and recording a third image of the plurality of targets with the camera in the third rotational position;
(d') determining a third set of calculated observation angles from the third image using the camera model, the third set of calculated observation angles comprising a third calculated observation angle of each target with respect to the camera;
(e') rotating the camera into a fourth rotational position with respect to the targets and recording a fourth image of the plurality of targets with the camera in the fourth rotational position;
(f') determining a fourth set of calculated observation angles from the fourth image using the camera model, the fourth set of calculated observation angles comprising a fourth calculated observation angle of each target with respect to the camera;
(g') determining a function or plot based on the third and/or fourth set of calculated observation angles and a set of differential angles, the differential angles representing a difference between the third and fourth calculated observation angles for each target;
(h') determining camera model errors from the function or plot;
(i') comparing the camera model errors to a predefined limit;
(j') if the camera model errors are lower than the limit, determining the camera model as being acceptable;
(k') if the camera model errors are not lower than the limit, calculating an updated camera model based on the camera model errors, and repeating steps d'), f'), g'), h'), i') and j') or k') based on the updated camera model.

In the first version, at least a portion of the plurality of targets may be arranged in a substantially one-dimensional row as seen from the camera, the one-dimensional row and the camera being located substantially within one plane. The step (f) of rotating the camera from the first rotational position to the second rotational position may be performed substantially within said plane.

The one-dimensional row need not be a straight line, but may extend along a circle segment such that all targets are positioned at equal distance to the camera. The plane is preferably oriented substantially along the horizontal plane. Thereby, the calibration set-up can be positioned within an office or laboratory space, which generally has a larger dimension in the horizontal direction than in the vertical direction. However, from a conceptual view, the plane could equally well be oriented in any other direction.

As mentioned above, it might be advantageous to arrange the targets at a distance from the camera where they effectively form point sources when observed by the camera. This sets a minimum distance between the camera, i.e., the diffractive aperture of the camera, and the targets. In general, the distance may typically be on the order of magnitude of a few meters. For example, a distance of 3 meters between each target and the camera can be used.

The main reason for the minimum distance is that it is not possible to rotate perfectly around the central axis. The central axis should go through the center of the aperture but due to mechanical tolerances this is not always true. Therefore, in practice, the camera is not only rotated but also translated (lateral movement) to a certain, small amount, resulting in an additional change in the observation angle. As the rotations are typically small (eg 1..2 degrees) and because the center of rotation is known reasonably well (within a mm or so) the translation can be considered substantially small. If the targets are sufficiently far away, then the translation can be considered negligible relative to the distance and thus the angular error originating from the translation also becomes negligible.

However, whether this condition is actually complied with or not may depend on the algorithm used, and what this algorithm can correct for.

According to the second version of the method, the plurality of targets are arranged in a two dimensional arrangement as seen from the camera, and the step (f) of rotating the camera from the first rotational position to the second rotational position comprises a rotation within a horizontal plane and a rotation within a vertical plane.

According to this embodiment, the recording of two images, i.e., two measurements, suffices to calibrate the camera in the x, y and z axis. Since the movement from the first to the second rotational position involves both a rotation around the vertical axis and a tilt with respect to the horizontal plane, the second rotational position will be different from the first rotational position in respect of both the horizontal angles and vertical angles Thereby, from each of the two images, calculated observation angles with respect to the x-axis and with respect to the y-axis can be determined for each target, enabling calculating camera model errors including x offset errors, y offset errors, and z offset errors from the two images.

According to the third version of the method, the plurality of targets are arranged in a two dimensional arrangement as seen from the camera, and the step (f) of rotating the camera from the first rotational position to the second rotational position is performed substantially within a horizontal plane, around a first axis extending through a plane of the aperture and extending substantially perpendicular to the horizontal plane, and the first and second calculated observation angles representing angles within the horizontal plane; the method further comprising the steps:
(l) determining a third set of calculated observation angles from the second image using the camera model, the third set of calculated observation angles comprising a third calculated observation angle of each target with respect to the camera, the third calculated observation angles representing angles in a direction substantially perpendicular to the horizontal plane;
wherein once the camera model has been determined as being acceptable in step (j):
   (m) rotating the camera around a second axis passing through its aperture, the second axis being substantially perpendicular to the first axis and extending within the horizontal plane, thereby rotating the camera into a third rotational position;
   (n) recording a third image of the plurality of targets with the camera in the third rotational position;
   (o) determining a fourth set of calculated observation angles from the third image using the camera model, the fourth set of calculated observation angles comprising a fourth calculated observation angle of each target with respect to the camera;
   (p) determining a second function or plot based on the third and/or fourth set of calculated observation angles and a set of second differential angles, the second differential angles representing a difference between the third and fourth calculated observation angles for each target; and
   (q) determining second camera model errors from the second function or plot;
   (r) comparing the second camera model errors to a second predefined limit;
   (s) if the second camera model errors are lower than the second limit, determining the camera model as being acceptable;
   (t) if the second camera model errors are not lower than the second limit, calculating an updated camera model based on the second camera model errors, and repeating steps (l), (o)-(r) and (s) or (t) based on the updated camera model.

Herein, step (m) of rotating the camera around a second axis can alternatively be described as tilting the camera with respect to the horizontal plane. Analogous to the general concept described herein above, the amount of this rotation also does not need to be known, and will generally be around 1 gon, 1 degree, or a few degrees.

Step (a) advantageously comprises arranging the plurality of targets such that one target is arranged at each lateral periphery of a field of view of said camera, and any remaining targets of said plurality of targets are substantially uniformly distributed between the targets arranged at a lateral periphery.

Arranging two of the targets close to either periphery of the field of view of the camera has been observed to be advantageous for the calibration procedure. The error in the change in observation angle measured by the camera, caused by an error in modelled relative position of the aperture with respect to the center of the image sensor, along a plane of the image sensor surface, has been seen to increase with distance from the center of the field of view. Hence, by positioning targets at or close to the edges of the field of view, a compensation parameter for this modelling parameter can be efficiently calculated.

According to embodiments, the two peripherally arranged targets may be located at around ±30° from the center line of a calibration measurement set-up, i.e., at around ±30° with respect to the optical axis of the camera when the camera is positioned in a neutral position in which its optical axis coincides with the center line of the calibration measurement set-up.

An odd number of the targets may be provided, wherein one target is arranged at or close to each lateral edge or side of the field of view of the camera, and one target located substantially at, or at least close to, the center of the field of view of the camera.

Arranging a target substantially at the center of the field of view has been seen to be advantageous, since the error in the measured change in observation angle caused by an error in the modelled focal distance has been seen to exhibit a maximum level at the center of the field of view. Thereby, the compensation parameter for the modelled focal distance, or the z-offset, can be efficiently calculated by positioning a target at a center of the field of view of the camera.

The method may further comprise the step (h1) determining the calibration parameters as corrections to be applied to parameters representing a model of the camera, wherein the calibration parameters are determined such that the determined change in observation angle is substantially equal for each target.

Corrections to the modelling parameters, defined by the initial or nominal camera model, describing the camera model are hence determined as corrections, or compensation offsets, for which all targets show substantially the same change in the calculated observation angle. Preferably, the corrections or compensation offsets are calculated for each of the three modeling parameters defining the camera model.

The corrections or compensation offsets can be calculated, using algorithms known in image processing. Algorithms that are known in the art of image processing are for example algorithms using gravity methods. Algorithms may involve either iterative algorithms, or direct calculations based on geometrical and/or trigonometric considerations, or a combination of direct and iterative methods.

For example, the algorithm steps may include calculating a center position of blobs recorded by the image sensor, the blobs representing images of the targets projected onto the image sensor. The center positions may be calculated to subpixel accuracy through use of so called center of gravity algorithms, as known to the person skilled in the art.

The camera model may comprise as parameters three-dimensional positions of pixels of the image sensor relative to the diffractive aperture.

The camera model, which is a mathematical model, or representation, of the camera, may hence be based on three parameters. These may be represented as coordinates in a coordinate system, typically a cartesian coordinate system. This relatively simple model has been seen to be sufficient for the purpose of calibrating the camera, the diffractive aperture rendering a simplified geometry as compared to lens based systems.

Additionally, the camera model may take the effects of other optical elements such as filters, glass cover elements or any other optical elements into account.

The method may further comprise the step of bringing the camera to a second temperature, and subsequently repeating the steps of any one of the preceding claims at the second temperature.

The calibration measurement steps described herein may be performed first at a first temperature. Subsequently, the camera is brought to a second temperature, different from the first temperature, and the calibration measurement steps repeated at the second temperature. During the different measurements, the camera is maintained at a substantially constant temperature. The camera may be brought to the second temperature by heating or cooling, e.g. in a climate chamber.

The method as described herein above may be performed while doing real measurements using the computer vision system.

In this embodiment, the system preferably comprises a microprocessor controlled rotation device arranged for rotating the camera into the different positions as described herein above. By performing the steps as outlined herein above and using the rotation device to rotate the camera, the camera can be calibrated while doing an operational survey, observing a number of stationary reference points and a number of movable survey points, by observing the change in observation angles of the reference points. That is, the stationary reference points can be used as the targets described herein above.

Calibrating the camera during a survey is advantageous as the calibration parameters of the camera model can change due to environmental influences like temperature but also due to aging of components. With only a single rotation device, preferably configured to rotate the camera around the Y axis of the aperture, i.e. within the horizontal plane, and at least three virtually static targets distributed substantially along horizon, at least the focal distance of the camera can be determined. In a practical embodiment the focal distance is most sensitive to environmental temperature changes hence it needs to be recalibrated during surveying. In general, also an x-axis offset could be calibrated for using this set-up.

Additionally, such a method can be even more advantageous as it can eliminate measurement errors due to dirt or other contaminations in the optical path. For example, a speck of dirt on an optical viewport may block a light ray from a survey target for one rotational position but not for another rotational position.

For some survey applications the survey points are known to move very slowly. The survey points can therefore be considered static for some substantially short amount of time. The survey targets will therefore not move substantially within the time required to determine a first and second set of observation angles for each survey and reference point. This way, the stationary reference points and the movable survey points can be used as the targets described herein above.

In another embodiment of the current invention the system includes a passive rotation device. Such a device may for example be a bi-metallic coil spring to rotate the camera around the aperture in response to an environmental temperature changes. Preferably, such a passive rotation device is configured to rotate the camera around the Y axis of the aperture so that the change in focal distance due to environmental temperature changes can be determined.

Such a passive rotation device may be advantageous in power constrained applications as it requires no power. This facilitates applications like remote battery or solar powered Internet-Of-Things sensors.

Although the targets have been described herein above as preferably being arranged substantially within a horizontal plane, i.e., along a horizon as seen from the camera, and, if applicable, along a vertical axis substantially along a vertical plane passing through the aperture of the camera, this is not a requirement. Although such arrangement might be advantageous in view of computational efficiency, making calculations easier, the method could equally well be used with targets arranged away from the horizontal and/or vertical axis. In such cases, the fact that targets are positioned (a significant) distance from the horizontal and/or vertical axis can be taken into account in the calculations, e.g. by additional math conversions or terms in equations.

The method of calibration according to the first aspect may be performed using a system according to a second aspect of the present invention.

According to the second aspect, a system for calibrating a camera of a computer vision system is provided, the camera comprising an image sensor and a diffractive aperture arranged for projecting incoming light onto the image sensor, the system comprising:
a plurality of targets to be observed by the camera;
a mounting device for mounting the camera, such that the plurality of targets are in a field of view of the camera when the camera is mounted on the mounting device, the mounting device enabling rotation of the camera between a first rotational position and a second rotational position with respect to the plurality of targets; and
one or more processors configured to:
   (b) provide a camera model representing a mathematical model of a camera;
   (c) record a first image of the plurality of targets with the camera in the first rotational position;
   (d) determine a first set of calculated observation angles from the first image using the camera model, the first set of calculated observation angles comprising a first calculated observation angle of each target with respect to the camera;
   (e) record a second image of the plurality of targets with the camera in a second rotational position;
   (f) determine a second set of calculated observation angles from the second image using the camera model, the second set of calculated observation angles comprising a second calculated observation angle of each target with respect to the camera;
   (g) determine a function based on the first and/or second set of calculated observation angles and a set of differential angles, the differential angles representing a difference between the first and second calculated observation angles for each target;
   (h) determine camera model errors from the function;
   (i) compare the camera model errors to a predetermined limit;
   (j) if the camera model errors are lower than the limit, determine the camera model as being acceptable;
   (k) if the camera model errors are not lower than the limit, calculate an updated camera model based on the camera model errors, and repeat steps d), f), g), h), i) and j) or k) based on the updated camera model.

In particular, the system is configured to perform the method according to the first aspect described herein above.

The image sensor is configured for receiving and detecting reflections and/or light beams generated by the targets located within the field of view of the camera. To this end, the image sensor may preferably be a two-dimensional sensor.

The one or more processing unit can be located within or at the camera, for example in the interior space of the camera, close to the image sensor. Alternatively, the processing unit may be located remote from the camera. Advantageously, the system comprises a first processor arranged within the camera, the first processor recording and storing images, and one or more second processors provided in a computer, the one or more second processors configured for receiving and storing the images and possibly other data, processing the images and any of the other data, and determining the calculated observation angles and the calibration parameters, i.e., the updated camera model.

The mounting device may advantageously comprise a microprocessor controlled rotation device. The microprocessor controlled rotation device can be configured for rotating the camera such as to move it into, or between, the different rotational positions described herein above. This can enable the method to be performed during surveying, i.e., live during measurements in the field, as described herein above.

Such a device may be an electric motor, a servo, a solenoid or some other microprocessor controllable device. Such a device may incorporate an angular encoder or some other angular feedback device. Such a device may also incorporate some means of limiting the rotation angle.

The rotation device may be configured to rotate the aperture around a single axis or multiple axis's independently. Preferably, the rotation device is configured to rotate the camera around the Y axis of the aperture.

The rotation device may for example be used to rotate a camera configured to survey a number of stationary reference points and a number of movable survey points.

In another embodiment, the camera includes a passive rotation device. Such a device may for example be a bi-metallic coil spring to rotate the camera around the aperture in response to an environmental temperature changes. Preferably, such a passive rotation device is configured to rotate the camera around the Y axis of the aperture so that the change in focal distance due to environmental temperature changes can be determined.

The mounting device may be configured to enable rotation of the camera around a vertical axis and/or a horizontal axis.

The one or more processors may be configured to perform one or more of steps b) to t) described herein above in respect of the method according to the first aspect.

**The** targets to be measured may be arranged according to any of the arrangements or distributions as described herein above in respect of the method of the first aspect.

According to a third aspect of the present disclosure, a computer program product is provided, the computer program product comprising instructions which, when executed by a computer, causes the computer to perform the steps of:
(b) providing a camera model representing a mathematical model of a camera comprising an image sensor and a diffractive aperture arranged for projecting incoming light onto the image sensor;
(d) from a first image of a plurality of targets, recorded with the camera in a first rotational position with respect to the targets, determining a first set of calculated observation angles from the first image using the camera model, the first set of calculated observation angles comprising a first calculated observation angle of each target with respect to the camera;
(f) from a second image of the plurality of targets with the camera in the second rotational position, determining a second set of calculated observation angles from the second image using the camera model, the second set of calculated observation angles comprising a second calculated observation angle of each target with respect to the camera;
(g) determining a function based on the first and/or second set of calculated observation angles and a set of differential angles, the differential angles representing a difference between the first and second calculated observation angles for each target;
(h) determining camera model errors from the function;
(i) comparing the camera model errors to a predetermined limit;
(j) if the camera model errors are lower than the limit, determining the camera model as being acceptable;
(k) if the camera model errors are not lower than the limit, calculating an updated camera model based on the camera model errors, and repeating steps d), f), g), h), i) and j) or k) based on the updated camera model.

Herein, the instructions may cause one or more processors of the computer to perform any one or more of the steps.

The instructions of the computer program product can further be configured to cause the one or more processors to control movement of the camera between the different rotational positions described herein above.

In summary, a method, a system and a computer program product are provided for calibration of a camera provided with a diffractive aperture as objective. With the calibration method, the relevant physical parameters of the camera model can be determined with a relatively simple and non-accurate set-up.

According to a general concept of the present disclosure, which is represented by the first aspect described herein above, by positioning the camera and a plurality of targets in one plane, the camera can be calibrated, in a direction along the plane, by recording two images of the plurality of targets, wherein between the recording of the two images the camera has been rotated within the plane and with respect to an axis passing through the diffractive aperture of the camera. The rotation is small, typically around one or a few degrees. For each of the two recorded images, a calculated observation angle of each target as registered on the image sensor, is determined using the camera model. From differences in calculated observation angles between the first and second images for each target, calibration parameters are determined. With an accurately calibrated camera model, all targets should experience the same difference in calculated observation angle. If this would not be the case, calibration parameters are determined and feed back into the camera model, and the calculations iterated until the calibration of the camera is deemed acceptable.

The general concept enables calibration along a first axis of the image sensor in a direction along the plane and in the focal distance of the camera. Calibration along a second axis of the image sensor, perpendicular to the first axis, can be performed according to any one of three different alternatives of the method as described herein above.

The method enables precise calibration of a survey instrument based on diffractive apertures, which facilitate monitoring/survey of structures to much higher accuracy than an instrument using a refractive lens.

The method according to the present disclosure has been observed to facilitate reaching an error in relative observation angles of a camera with a pinhole or other type of diffractive aperture close to 1 milli-gon or 1 milli-degree. This is roughly 50 times better than the achievable error of survey instruments having a glass lens, which are primarily caused by deformations of the lens.

### Brief description of the drawings

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms "have," "may have," "include," and "may include" as used herein indicate the presence of corresponding features (for example, elements such as numerical values, functions, operations, or parts), and do not preclude the presence of additional features.

The terms "A or B," "at least one of A or/and B," or "one or more of A or/and B" as used herein include all possible combinations of items enumerated with them. For example, "A or B," "at least one of A and B," or "at least one of A or B" means (1) including at least one A, (2) including at least one B, or (3) including both at least one A and at least one B.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

**It** will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. To the contrary, it will be understood that, when an element (for example, a first element) is "directly coupled with/to" or "directly connected to" another element (for example, a second element), there is no intervening element (for example, a third element) between the element and another element.

The expression "configured to (or set to)" as used herein may be used interchangeably with "suitable for" "having the capacity to" "designed to" "adapted to" "made to," or "capable of" according to a context. The term "configured to (set to)" does not necessarily mean "specifically designed to" in a hardware level. Instead, the expression "apparatus configured to..." may mean that the apparatus is "capable of..." along with other devices or parts in a certain context.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

For the purpose of determining the extent of protection conferred by the claims of this document, due account shall be taken of any element which is equivalent to an element specified in the claims.

The present invention will be discussed in more detail below, with reference to the attached drawings, in which:
Figure 1A-1C depict several schematic setups of a system for monitoring a position and/or movement of an object, as are known from the prior art;
Figure 2 schematically illustrates a system according to a general embodiment of a camera to be calibrated according to the present disclosure;
Figure 3 depicts a functional overview of a camera which can be calibrated with the method of the present invention;
Figures 4A, 4B and 4C show schematic illustrations of features of a camera model used for calibration and errors in the aperture position calibrated for according to an embodiment of the present invention;
Figure 5 schematically illustrates a set-up for the calibration measurements according to embodiments of the present invention;
Figure 6 schematically illustrates scenes as observed by the camera during calibration measurements according to embodiments of the present invention;
Figure 7 shows a flow chart of a method for calibration according to embodiments of the present invention;
Figure 8 shows a two-dimensional arrangement of targets according to some embodiments of the present invention;
Figure 9 shows a flow chart of a method for calibration according to further embodiments of the present invention;
Figure 10 shows a flow chart of a method for calibration according to further embodiments of the present invention;
Figure 11 shows a flow chart of a method for calibration according to still further embodiments of the present invention;
Figures 12-17 illustrate examples of simulated measurements at different steps of the calibration procedure.

### Description of embodiments

In general, the present disclosure relates to calibration of systems for surveying objects or tracking of movement of objects by tracking one or more targets or survey reflectors attached to the object.

Although the illustrated embodiments are described in respect of a camera having an optical entry system, i.e., camera objective, formed by non-refractive element in the form of a diffractive aperture or pin-hole at the camera objective, it should be understood that the non-refractive element may alternatively be any other non-refractive element, such as the non-refractive elements described in WO 2021/167452 A2. Analogously, although the embodiments are described using a prism as the survey reflector, it should be understood that a different reflective element, for example another type of prism or a hollow mirror, could also be used.

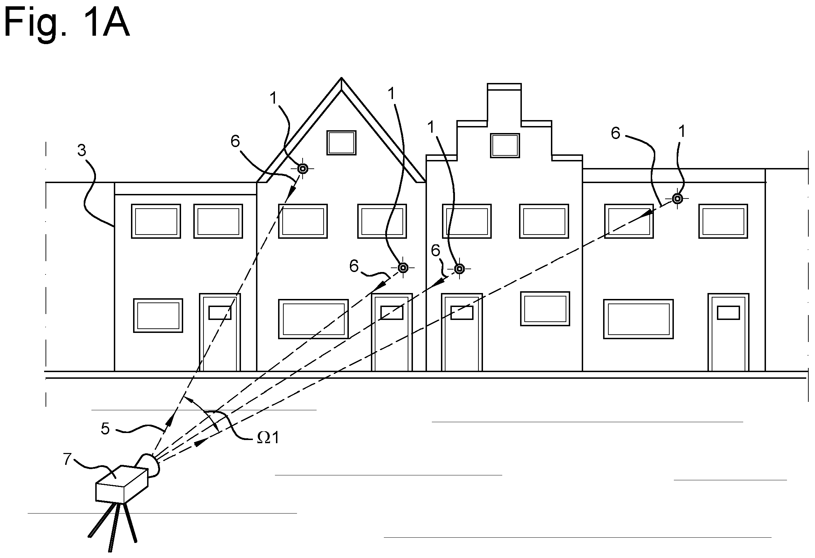

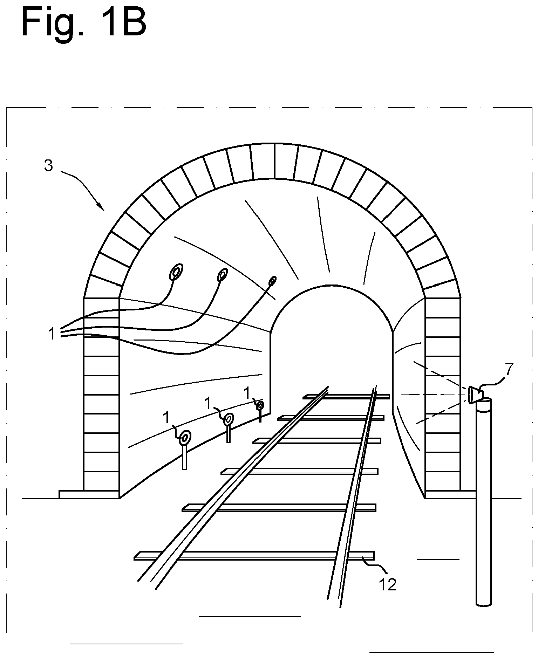

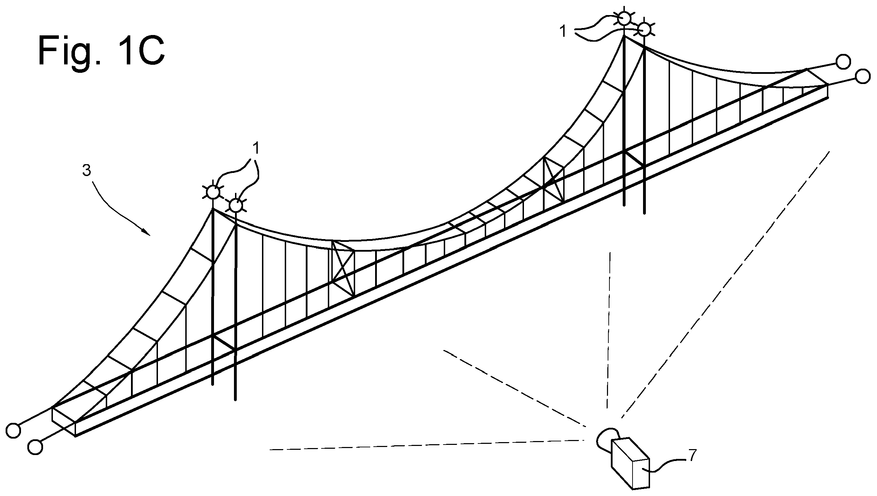

Figure 1A shows an example setup of a system in which an object 3 is monitored. The system comprises a sensor apparatus, like a camera 7. The system also comprises a plurality of targets 1, herein taking the form of survey reflectors, which are attached to the object 3 at a plurality of locations. The object 3 is shown as comprising one or more buildings to which the targets 1 are fixed. However, the object 3 may alternatively be any other construction like a tower, a tunnel (Figure 1B), or a bridge (Figure 1C), but also a vehicle (like a boat on land), or a natural object like a big rock.

The object 3 is monitored by monitoring or measuring the positions of the survey reflectors 1. By monitoring their positions over time, movement of the whole or parts of the object 3 can be detected. Preferably also an amount, degree and/or direction of the movement can be determined. Thereby, the status, such as the stability or integrity, or the mechanical properties, of the object 3 can be monitored.

One camera 7 is shown. However, the system may comprise more than one camera 7.

**In** the illustration of Fig. 1A, the camera 7 is arranged to generate and transmit a diverging light beam 5 to the plurality of survey reflectors 1. The survey reflectors 1 reflect the part of the diverging light beam 5 impinging thereon, thereby forming reflected beams 6 which are reflected back to the camera 7. The light beam 5, generally substantially cone-shaped, has a solid angle, Ω1, covering the field of view of the camera 7. Thereby, the plurality of survey reflectors 1 can be monitored substantially simultaneously. Alternatively, as known to the person skilled in the art, the targets may be active targets, such as light emitting diodes, LEDs, each emitting a light beam 6 which is recorded by the camera. In such embodiment, the camera need not be arranged to generate and transmit a diverging light beam 5. It is to be understood, that the calibration method according to the present disclosure can be applied analogously to both cameras 7 including a light source emitting a light beam 5 and to cameras 7 without a light source.

Figure 1B shows an implementation in a tunnel 3. A railway with railway sleepers 12 runs through the tunnel 3. Both the tunnel wall and the railway sleepers 12 are provided with survey reflectors or targets 1. Camera 7 is arranged to view all survey reflectors or targets 1 in its field of view.

Figure 1C shows an implementation on a bridge 3. The bridge 3 is provided with a plurality of survey reflectors or targets 1. Camera 7 is arranged to view all survey reflectors 1.

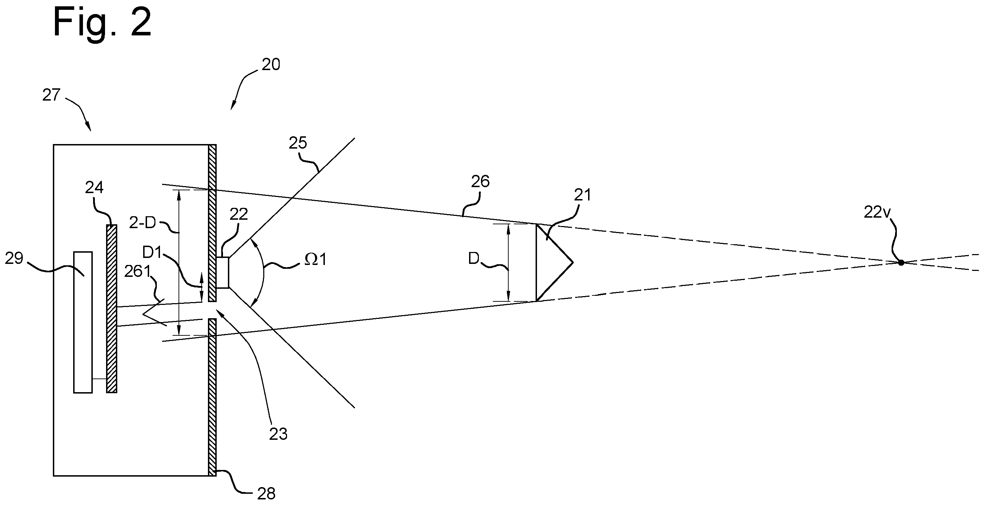

**Figure** 2 provides a schematic illustration of the measurement principle of a system 20 for monitoring a plurality of locations on an object 3, to which the calibration method as herein described may be applied. For ease of illustration, Figure 2 illustrates the system 20 as monitoring one target, or survey reflector, 21. However, as illustrated in e.g. Figures 1A to 1C, the camera 27 can be arranged for monitoring a plurality of survey reflectors. In the illustrated embodiment, the survey reflector 21 is formed by a prism. Alternatively, other types of reflectors, for example a hollow mirror, could be used.

The system 20 comprises a camera 27 and a processing unit 29, which may be comprised or arranged within the camera 27. Alternatively, it may be arranged remotely from the camera 27. For calibration purposes, one or more processors may be provided external to the camera, in addition to the processor unit within the camera.

**In** the illustrated embodiment, the camera 27 comprises a light source 22 emitting a diverging beam 25. The light source 22 generally comprises a light emitting diode, LED. The beam 25 has a first solid angle, Ω1, which may be large enough to cover substantially the entire field of view of the camera 27. Thereby, all survey reflectors 21 located within the field of view of the camera are irradiated with the beam 25 without moving, rotating or scanning the camera or light beam (with the possible exception of one or more survey reflectors being shadowed by an obstacle, such as a pedestrian or vehicle in the case of monitoring a building as shown in Figure 1A or a train in the case of monitoring a tunnel as shown in Figure 1B).

The survey reflector 21 will reflect the part of the beam 25 which it receives, forming a reflected beam 26 which is reflected back towards the camera 27.

Alternatively, as mentioned herein above, instead of the survey reflector 21 active targets or beacons, typically comprising an LED, itself emitting a beam 26, may be used. In such embodiment, the camera does not need to comprise a light source 22. As will be understood by the person skilled in the art, a light beam emitted by such active target is received and processed by the camera 27 in the same manner as described herein with respect to beam 25.

The apparatus 20 further comprises an image sensor 24, arranged for receiving light, i.e. the part 261 of the reflected beam 26 which enters the camera 27. As a result of the reception of the reflected light 261, the image sensor 24 generates data, in preferred embodiments in the form of a two-dimensional image.

The beam 25 may be amplitude modulated, thereby exhibiting a defined variation in time of its amplitude. Alternatively and/or additionally, other types of coding may be applied to the first beam. When using active beacons or targets, the light emitted thereby may be coded analogously. By applying appropriate filtering techniques during image processing of the image data, environmental influences on the measurements, such as interference by ambient light, can be reduced.

The details and locations of the light source 22 and any possible additional light sources, the various types of coding applied to the beam 25, as well as to any possible additional beams, and the processing thereof during image processing, has been described in detail in WO 2021/167452 A2.

Between the image sensor 24 and the first light source 22, or at least the emitting surface thereof, a body 28 is arranged, which in the illustrated embodiment is substantially planar and forms part of the housing of the camera. The body 28 is non-transparent to light, and comprises an optical entry system, in the illustrated embodiment in the form of a diffractive aperture, or pinhole, 23, forming the objective of the camera.

Although the description herein will be focused on the optical entry system being formed by a pinhole, other types of diffractive elements, in particular as described in WO 2019/143250 A1 and WO 2021/167452 A2, may be equally well suitable.

The processing unit 29 is configured to determine, generally by image processing of the data provided by the image sensor, a location or angle of orientation of each survey reflector from the data and to detect a movement of one or more of the plurality of survey reflectors based on a comparison of the determined location or angle of orientation of each survey reflector with previously determined locations or angle of orientation thereof.

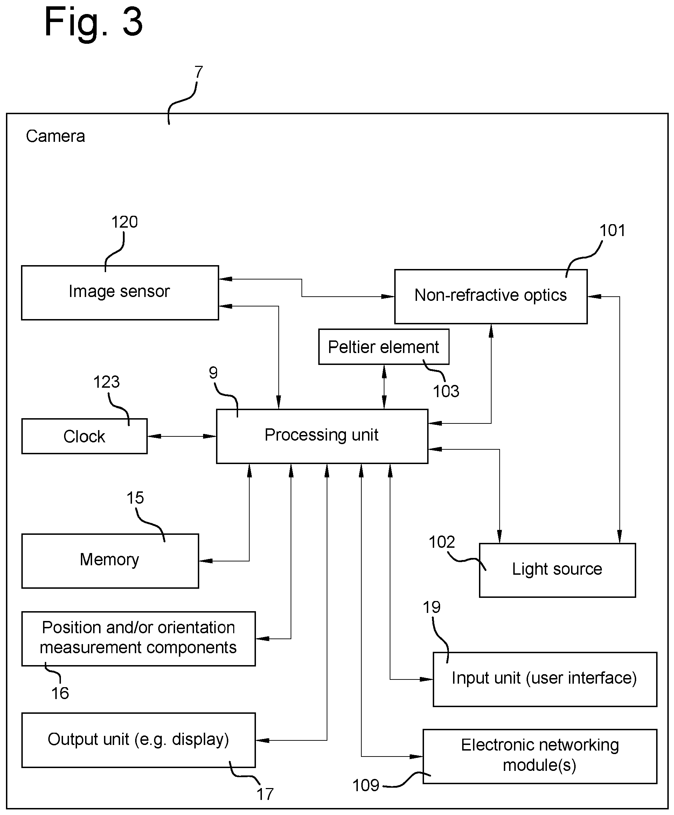

Figure 3 shows an example of a camera 7. The example camera 7 has a processing unit 9 which is connected to non-refractive optics 101, an image sensor 120, a clock 123, a memory 15, one or more position and/or orientation measurement components 16, an output unit 17, an input unit (or user interface) 19, electronic networking module(s) 109, and one or more light sources 102. The non-refractive optics 101 is shown to be connected to the image sensor 120. This latter "connection" need not be a physical connection. Here, "connection" is intended to refer to a situation where the non-refractive optics 101 is arranged to receive ambient light such that the received ambient light is received by the image sensor 120. Not all functional elements shown in Figure 3 need be present as can be understood from the embodiments described herein above.

**All** connections intended for transmission of data may be physical connections (wires) however, alternatively they may be wireless and based on transmission of electromagnetic / light radiation.

The non-refractive optics 101 may be any of the types of diffractive apertures referred to herein above, e.g. one or more pinholes. The diameter of a pinhole may be in a range between 50 and 400 µm. Alternatively, as described above, the non-refractive optics may be replaced by a lens, which preferably is a thin lens allowing temperature modulation at low computation efforts.

The processing unit 9 may be any suitable processing unit known from the art.

The image sensor 120 preferably comprises a set of light sensitive elements (pixels) arranged in a 2D matrix forming a camera's image plane, like a CCD-sensor or a CMOS-sensor. The image sensor 120 is arranged to receive the light beams 6 having entered through the diffractive aperture 101. Each light beam 6 will be focussed on a subset of the light sensitive elements. Each such subset corresponds to a solid angle of one incoming light beam 6, i.e., both an angle of incidence in a horizontal and an angle of incidence in a vertical plane relative to the earth. Angles of incidence can, of course, also be measured relative to another object than the earth, like a geostationary satellite. As long as both the camera 7 and the survey reflectors 1 remain at fixed positions, these subsets are static per survey reflector 1.

In an alternative embodiment a line sensor can be used in combination with an optical slit as objective, rather than a pinhole, as described in WO 2019/143250 A1.

Optionally, a temperature control system 103 may be provided, in order to reduce thermal influences on the measurement data. The thermal capacity of the non-refractive optics 101 is relatively low when compared to a camera 7 using a lens system instead of the non-refractive optics 101. Thermal stability can be improved by implementing a temperature control system in the form of a thermostat 103. Figure 3 shows an embodiment with a reversible (i.e. configured for both cooling and heating) Peltier element 103, to the non-refractive optics 101. The Peltier element 103 is connected to and its temperature is controlled by processing unit 9 such that non-refractive optics 101 is kept at a predetermined temperature. Alternatively, thermal stability can be increased by the design of the camera housing, in particular via the material used therefore, and/or by measuring the temperature at various locations therein and using a model accounting for thermal influences during processing of the data from the image sensor.

In the below, some general aspects of the systems described herein above and methods of operation thereof will be summarized.

The image sensor 24, 120 converts the received light beams 6 into an image. The image is a set of electronic signals, here called pixel signal. Each pixel signal is generated by one light sensitive element and has a value depending on the light intensity of light received by the light sensitive element. Thus, the pixel signals may also relate to the object 3 to which the survey reflectors 1 are attached and its surroundings.

The image sensor is positioned such that the light entering the camera through the non-refractive element forms a diffraction pattern on the image sensor. The diffraction pattern will depend on the properties of the non-refractive element, and will show up as dark or bright regions on the image sensor depending on the distance and angle of the respective pixels of the image sensor to the non-refractive element. By integrating a plurality of data frames, each comprising a number of pixels, typically at least 100, measurement results of high resolution can be achieved.

The processing unit 9 is arranged to receive the pixel signals from the image sensor 120 and store them in memory 15. The pixel signals may be stored by processing unit 9 as a single picture, preferably with a time stamp and/or position stamp indicating the position of camera 7. However, preferably, the pixel signals are stored by processing unit 9 as a series of pictures together forming a video, in which each picture is provided with a time stamp and/or position stamp indicating the position of camera 7.

Clock 23 provides clock signals to processing unit 9, as known to a person skilled in the art. The clock signals are used for the normal processing of processing unit 9. Processing unit 9 may base the time stamp on these clock signals. However, camera 7 may also be equipped with a GNSS unit receiving time signals from a satellite or may receive time signals from another suitable source.

Memory 15 may comprise different types of sub-memories, like ROM (Read Only Memory) / Flash types of memory storing suitable program instructions and data to run the processing unit 9. Also, memory will comprise suitable RAM (Random Access Memory) types of memory for storing temporary data like the data received from image sensor 120. Memory 15 may also comprise cache type memory. Some or all of the sub-memories may be physically located remote from the other components. Processing unit 9 may also be arranged to send all pixel signals to a remote unit via electronic networking module(s) 20 for external storage and processing. A local copy of these pixel signals may then, but need not be, stored in a local memory 15 within camera 7.

Memory 15 stores initial position data indicating the initial position of camera 7. Such initial position data may have been established by using a theodolite and then be stored by a user. Such initial position data can also result from a measurement made by the camera 7 itself. E.g., the camera 7 can collect consecutive pictures from known "blinking" light sources installed on tall air traffic obstacle markers having well known locations. Such obstacle markers may be placed in defined vertical distances on tall structures and thereby allow for triangulation. Memory 15 also stores a camera ID identifying camera 7 and being used by processing unit 9 in external communications with other devices to identify itself to those other external devices.

**Position** and/or orientation measurement components 16 may include one or more accelerometers and/or gyrometers/gyroscopes, as is known to a person skilled in the art. They may also include the above mentioned GNSS unit. Such accelerometers and/or gyrometers/gyroscopes measure the camera's own motion and derive an updated camera position and orientation from such measurements. The updated camera position and/or orientation is then stored by processing unit 9 in memory 15. By doing so, changing camera positions and/or orientations can be taken into account when measuring the position of the one or more survey reflectors 1. Accuracy may be in the order of a few 1/1000 degrees. Tests have shown 2 milli degrees peak-to-peak. Moreover, a three-axis accelerometer package can also measure the direction of earth gravity when static. A 3D gyro package of sufficient performance can measure the direction of the earth rotation axis (also when static).

Output unit 17 may comprise one or more sub-output-units, like a display and a speaker.

**Input** unit 19 may comprise one or more sub-input-units like a keyboard and a microphone. The display and keyboard may be made as two distinct touch screens., However, they may also be implemented as a single touch screen.

Electronic networking modules 20 may comprise one or more of LTE (Long Term Evolution), Ethernet, WiFi, Bluetooth, Powerline communication, Low Power Wide Area Network (e.g. Lora^{™} and Sigfox^{™}), and NFC (Near Field Communication) modules. Technology known from the IoT (Internet of Things) may be used, as well as any proprietary communication protocol.

The at least one light source 102 comprises at least one light source like a Light Emitting Diode (LED) source configured to generate light. Processing unit 9 is arranged to control each LED source such that they generate a light beam.

The camera 7, 27 is typically arranged on a fixed position such that it is static. Then, the static position is known and stored in memory 15 accessible by processing unit 9 of the camera.

When all survey reflectors or targets 1, 21 have been installed they have an initial position / orientation angles which may be stored in the camera's memory 15.

Thus, when the system starts, the camera knows all initial positions /orientation angles of survey reflectors /targets which correspond to an initial position and orientation of object 3 to which the survey reflectors are attached.

The processing unit 9 is arranged to calculate an initial solid angle of incidence of each of the reflected light beams 6. I.e., received reflected light beams are imaged, via the non-refractive optics, on one or more light sensitive elements of image sensor 120. Processing unit 9 determines which one these light sensitive elements are and then establishes the solid angle of incidence of the corresponding light pulse. Techniques to do so are known to persons skilled in the art and need no further detailed explanation here.

When the object 3 is stable, i.e., does not move, the positions of all survey reflectors 1 are also stable. Consequently, the solid angle of incidence of each reflected light beam on the camera's image sensor is fixed. However, as soon as the object 3 moves, or parts thereof, this solid angle of incidence of the reflected light beams 6 changes. The processing unit 9 is arranged to calculate this change of the solid angle per light beam 6.

Images recorded by the camera can be processed as described in, e.g. WO 2019/143250 A1 and WO 2021/167452 A2, and/or by any methods known to the skilled person, to determine positions, orientations and/or observation angles of a plurality of targets observed by the camera.

Figure 4A shows a schematic illustration, as seen from the side, of the image sensor 24 and the diffractive aperture 23 of the camera 27, together with the x, y and z axis of a coordinate system which can be used to define the camera model and calculate parameter offset values for calibrating the camera model, according to the present disclosure. In the preferred embodiments, the nominal position of the centre of the diffractive aperture is taken as the origin of the coordinate system. The x- and y-axes are substantially parallel to the surface of the image sensor 24. The z axis represents the optical axis of the camera, and the distance between the surface of the image sensor 24 at the optical axis and the centre of the diffractive aperture 23 at the origin, i.e., along the z-axis, represents the focal distance.

Figure 4B shows the situation of Fig. 4A as seen from the front of the camera, showing a front side 28 of the housing, provided with the diffractive aperture 23.

According to embodiments, the x-axis may be arranged along the horizontal plane and the y-axis along a vertical plane, substantially perpendicular to the horizontal plane.

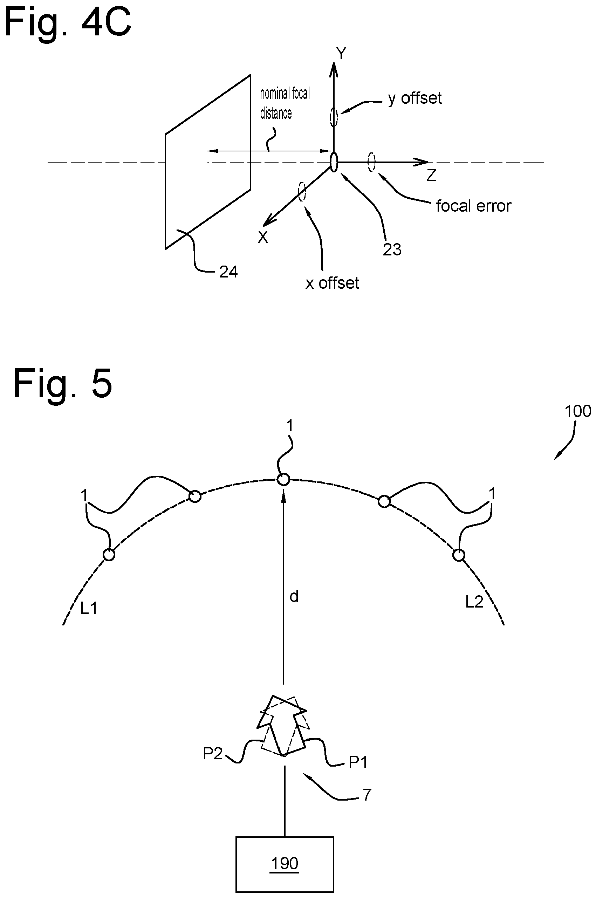

In Figure 4C, the diffractive aperture 23 at the nominal position and the photon sensitive surface of the image sensor 24, as well as offsets of the diffractive aperture along each of the three coordinate axis are schematically illustrated. As schematically illustrated in Fig. 4C, the position of the diffractive aperture 23 may deviate in up to three dimensions from the nominal, i.e., the expected or designed, position.

The deviations in x, y and z dimensions are called x offset, y offset and focal error, respectively. For the sake of simplicity, the description of the effects of deviating parameters of the camera model will be limited to targets viewed approximately at a horizontal or vertical line, both lines going through the optical axis (forming a cross shape).

A survey system with a well-calibrated camera will show the following behavior:

If the camera is rotated around the aperture in a horizontal plane, i.e., around the y-axis as illustrated in Fig. 4B, ('yaw' movement), the reported horizontal angles, i.e., the calculated observation angles in the horizontal direction, of the horizontally distributed targets in the aforementioned limited set of targets, will all change by an amount, called differential angle, that is equal to the rotation angle of the camera.

If the camera is rotated around the aperture in a vertical plane that is in parallel with the optical axis, i.e., around the x-axis as illustrated in Fig. 4B ('pitch' movement), the reported vertical angles of the vertically distributed targets in the aforementioned limited set of targets, will all change by an amount, called differential angle, that is equal to the rotation angle of the camera.

The abovementioned deviations will have effects on the measurement data. Possible deviations of the image sensor position in directions opposite to deviations of the aperture will have the same effects.

The, partly independent, effects of the deviations:

If only the x offset is non-zero and the camera is rotated around the Y axis of the aperture, the calculated horizontal angle of a horizontally distributed target in the aforementioned limited set of targets, will change by the rotation angle of the camera plus a so-called differential error (which can also be negative). This error is proportional to the horizontal angle between the direction of the target and the optical axis.

If only the y offset is non-zero and the camera is rotated around the X axis of the aperture, the calculated vertical angle of a vertically distributed target in the aforementioned limited set of targets, will change by the rotation angle of the camera plus a differential error. This error is proportional to the vertical angle between the direction of the target and the optical axis.

**If** only the focal error is non-zero, and the camera is rotated around the Y axis of the aperture, the calculated horizontal angle of a horizontally distributed target in the aforementioned limited set of targets, will change by the rotation angle of the camera plus a differential error. The differential error is positive or negative, depending on the sign of the focal error. The absolute value of the differential error is maximal for a target at the optical axis. The absolute value of the differential error will decrease with the absolute value of the angle between the horizontal angle of the direction of the target and the optical axis.

If only the focal error is non-zero, and the camera is rotated around the X axis of the aperture, the calculated vertical angle of a vertically distributed target in the aforementioned limited set of targets, will change by the rotation angle of the camera plus a differential error. The differential error is positive or negative, depending on the sign of the focal error. The absolute value of the differential error is maximal for a target at the optical axis. The absolute value of the differential error will decrease with the absolute value of the angle between the vertical angle of the direction of the target and the optical axis.

Differential angles and thus potential errors in them can be provoked by (slightly) rotating the camera (for example 1 degree), in the horizontal plane, or in the vertical plane that is in parallel with the optical axis (or a combination of both).

If the x, y and z offsets are determined by mathematical expressions or by iterations of an algorithm, and subsequently are compensated for in the processing of the measured image data to determine observation angles, orientations and/or positions of the targets, the residual differential errors caused by the aperture offsets will be negligible.

**In** case of one or more aperture offsets, targets that are in the field of view of the camera, but not in the aforementioned limited directions (i.e., not positioned on either of the x- or y-axes), will also show differential angle errors, but the relations between aperture offsets and the differential angle errors are more complicated.

Therefore, for ease of computing the camera model parameters, it is preferred to use only the restricted directions to targets, i.e., to use targets positioned along one or both of the x- and y- axes. Moreover, as can be understood from the described effects of aperture offsets , measuring horizontal as well as vertical differential angle errors can be performed with a distributed plurality of targets within a field of view of the camera, even in one plane only, for example on the floor, provided that the camera is turned 90 degrees around its optical axis between measuring horizontal and vertical angles (not necessarily in that order).

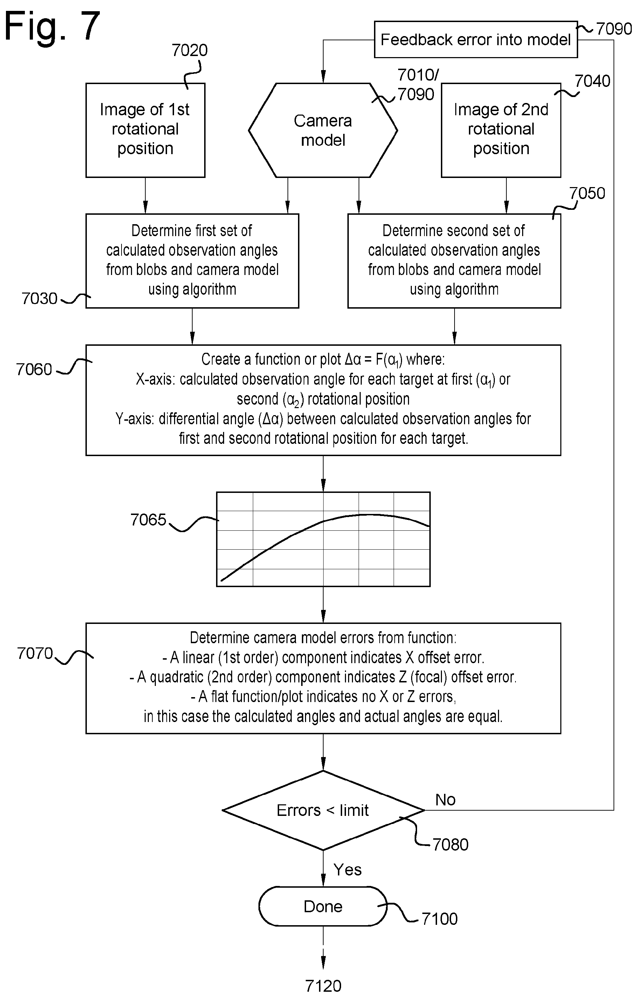

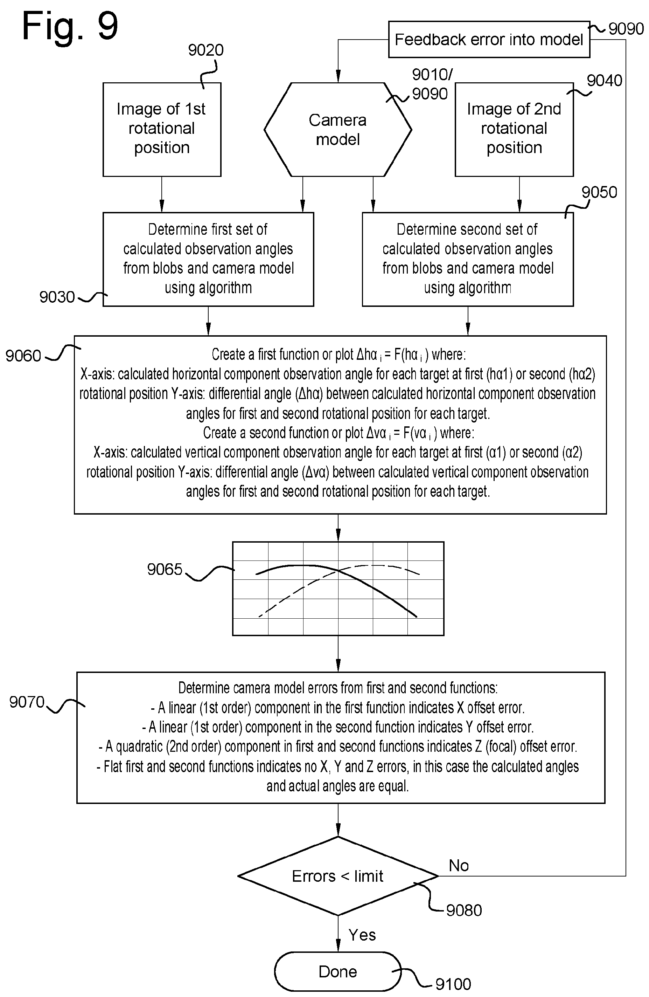

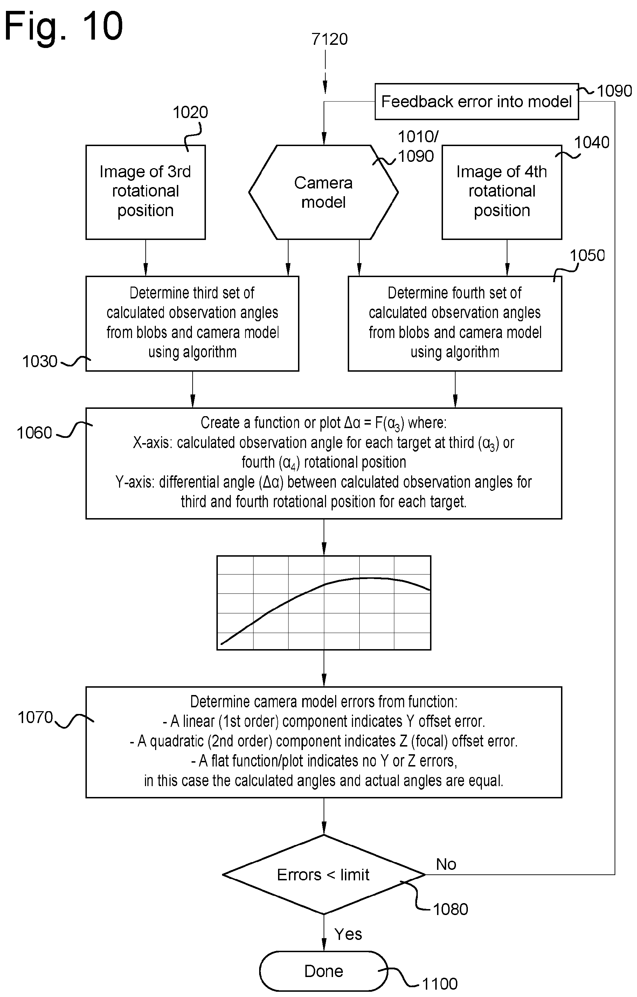

Figure 5 schematically illustrates a system 100, or set-up, for the calibration measurements according to embodiments of the present disclosure. The system comprises a camera 7, which may be a camera as described with reference to Figures 2 and 3, a plurality of targets 1, arranged to be observed by the camera 7, and an external processing unit 190 comprising one or more external processors, for example located in a laptop or desktop computer. The external processing unit 190 is connected or connectable to the camera 7, i.e., to the electronic networking module(s) 109 for receiving the recorded images and possibly other data from the camera 7 for further processing, such as one or more of the steps of calculating observation angles, differential angles, camera model errors and/or calculation of calibration parameter values as described in respect of the various embodiments of the present disclosure. In particular, the one or more processors 190 may be configured, i.e., programmed, for performing one or more of the steps 7030-7100 described with reference to Fig. 7, or one or more of the steps illustrated in figures 9 or figure 10.

The camera 7 is arranged on a mounting device, such as a rotation stage. The mounting device may be any mounting device as described in the Summary section herein above. Figure 5 illustrates camera 7 being rotated from a first rotational position P1 to a second rotational position P2. By recording an image of the plurality of targets 1 with the camera in each of these positions, aperture offsets and calibration parameter values can be calculated.

The targets 1 can be either reflective targets or active light sources, as described herein above. The distance d between the targets 1 and the camera 7 can be set based on various parameters such as the camera, the algorithms used for image processing and calculations of target positions and observation angles, practical considerations such as spatial constraints if performing calibration in a laboratory setting or in the field, etc.

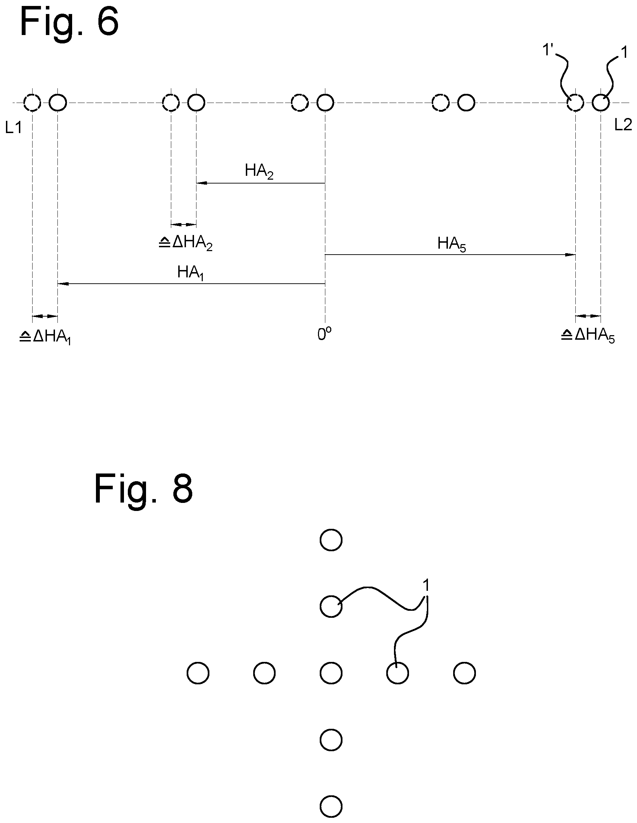

**In** Fig. 5, the targets are illustrated as being arranged in one plane, for example a horizontal plane, in which also the camera is positioned. In Fig. 5, the targets are further illustrated as being positioned along a semi-circle, all having substantially the same distance to the camera. This is however not limitative, but the targets 1 could alternatively be arranged along a straight line. In other embodiments or alternatives of the method, the plurality of targets may be provided in a two dimensional arrangement or array, e.g. as shown in Fig. 8.

As illustrated in Fig. 5, the targets are preferably substantially uniformly distributed between a first lateral, or peripheral, position, L1, and a second lateral, or peripheral, position, L2, with one central target arranged substantially along the optical axis of the camera. Although this may be preferred as described in the Summary section, other arrangements are also possible.

In general, the distance d may be several meters, in accordance with distances used in practical, real life survey settings. In examples discussed herein, the distance was around 3 meters.

Figure 6 schematically illustrates scenes as observed by the camera 7 during calibration measurements using the system 100 of Fig. 5, when moving from the first rotational position P1 to the second rotational position P2. The solid circles illustrate the observed positions of the plurality of targets 1 with the camera in position P1, and the dotted circles the observed positions of the plurality of targets 1 with the camera in position P2, respectively. In each of the positions P1 and P2, the position of each target can be represented by its calculated observation angle, HAᵢ. In Fig. 6, the calculated observation angles HAᵢ in P2 is indicated, together with the differential angle ΔHAᵢ showing the change in calculated observation angle for each target between P1 and P2. Calibration of the camera, i.e., calculation of calibration parameter values, can be performed using a method as illustrated in Fig. 7, starting from an initial camera model and the images recorded in P1 and P2, respectively.

Figure 7 shows a flowchart illustrating a method of calibrating the camera 7 according to embodiments of the present disclosure. Although the method is described herein in respect of a camera of a monitoring or surveying system, the method can be applied analogously to cameras directed to other types of computer vision systems.

Steps 7010 to 7100 of the method of Fig. 7 may advantageously be performed on one or more processors, such as the internal processor 109 of the camera and/or one or more external processors 190.

Prior to starting the flowchart illustrated in Fig. 7, the plurality of targets are distributed within a field of view of the camera. For example, the targets, and the camera, may be arranged as illustrated in Fig. 5.

In step 7010, an initial camera model is provided. This can be a camera model based on the design of the camera, or a camera model obtained during previous calibration of the camera. The camera model may include a mathematical model of positions of pixels of the image sensors with respect to the centre of the aperture 23, i.e. the objective, of the camera. The model may be based on a coordinate system as described with reference to Fig. 4A-4C. The camera model may additionally take into account further parameters and features of the camera.

In step 7020, the camera 7 is positioned in a first rotational position, P1, with respect to the targets 1, e.g. position P1 of Fig. 5, wherein a first image of the plurality of targets is recorded.

In step 7030, a first set of calculated observation angles is determined from the first image, using the camera model provided in step 7010 and an algorithm, which may be known in the art as described herein above. The first set of calculated observation angles comprises a first calculated observation angle of each target with respect to the camera, with the camera in the first rotational position.

In step 7040, the camera is moved to a second rotational position, e.g. position P2 illustrated in Figure 5, with respect to the plurality of targets, and a second image of the plurality of targets is recorded with the camera in the second rotational position.

In step 7050, analogous to step 7030, a second set of calculated observation angles is determined from the second image, using the camera model provided in step 7010. The second set of calculated observation angles comprises a second calculated observation angle of each target with respect to the camera, with the camera in the second rotational position.

In step 7060, a function or plot is determined, based on the first and/or second set of calculated observation angles and a set of differential angles, the differential angles representing a difference between the first and second calculated observation angles for each target. An example of such plot is shown in the step between steps 7060 and 7070.

In step 7070, using the function or plot, camera model errors are determined. The camera model errors may be determined as offset values, e.g. as illustrated in Fig. 4C, to one or more of the parameters defining the camera model.

Parameter offsets in one or more of the x, y and z coordinates can be determined as follows:
- A linear (1^{st} order) component indicates an X offset error (when the movement from the first rotational position to the second rotational position is within the horizontal plane) and/or an Y offset error (when the movement from the first rotational position to the second rotational position is a rotation within a vertical plane.
- A quadratic (2^{nd} order) component indicates Z (focal) offset error.
- A flat function/plot indicates no X (Y) or Z errors. In this case, the calculated observation angles and the actual observation angles are all equal.

The camera model errors, or parameter offset values, can be quantified, i.e., numerical values of the errors can be calculated from the 1^{st} and/or 2^{nd} order components.

In step 7080, the camera model errors are compared to preset limits, considered to provide measurement data of sufficient accuracy.

If the camera model errors are not within the preset limits, the camera model errors are fed back into the camera model, and an updated camera model is provided in step 7090. Subsequently, the algorithm, or flow chart, is re-iterated for steps 7030, 7050, 7060, 7070 and 7080. This re-iteration is performed until the resulting camera model errors are lower than the present limit.

If the camera model errors are smaller than the present limit, the camera model is determined to be acceptable, i.e., to be calibrated to sufficient accuracy, step 7100.

As described, the movement of the camera from the first rotational position, in 7020, to the second rotational position, in 7040, may be performed within one plane, generally the horizontal plane. The method set out in Fig. 7 then results in calibration within that plane and in the focal direction, i.e., in the x- and z-directions.

For certain applications or scenarios, calibration along x and z may be sufficient. For example, for many surveying applications, calibration in the horizontal direction has been observed to be most critical.

The method as described herein above with respect to Fig. 7, can be performed either in a laboratory set-up, or in a surveying set-up in the field.

According to other embodiments, the plurality of targets may be arranged in a two-dimensional arrangement, for example in an arrangement as illustrated in Figure 8, comprising two one dimensional arrangement along the x- and y- axis, respectively, i.e., arranged substantially perpendicular and crossed with respect to one another. In such embodiments, the movement of the camera from the first to the second rotational position may comprise both a rotation around the x-axis and a rotation around the y-axis, enabling determination of calculated observation angles with respect to both the x- and the y-axis, thereby enabling calibration in all three dimensions using a first and a second recorded image.

Such method is illustrated in the flow chart of figure 9. The steps 9010, 9020, 9030, 9040, 9050, 9080, 9090, and 9100 are similar to steps 7010, 7020, 7030, 7040, 7050, 7080, 7090 and 7100, respectively, of figure 7, and will therefore not be described in detail here.

In step 9060, the first and second set of observation angles each comprise both horizontal angle components and vertical angle components. A first function or plot is determined, based on the first and/or second set of calculated horizontal components of the observation angles and a set of horizontal differential angles, the horizontal differential angles representing a difference between the first and second calculated horizontal components of the observation angles for each target. An example of such two plots is shown in the step 9065 between steps 9060 and 9070.

In step 9070, using the first and second functions or plots, camera model errors are determined. The camera model errors may be determined as offset values, e.g. as illustrated in Fig. 4C, to one or more of the parameters defining the camera model.

Parameter offsets in one or more of the x, y and z coordinates can be determined as follows:
- A linear (1^{st} order) component in the first function or plot indicates an X offset error (corresponding to the component of the movement within the horizontal plane from the first rotational position to the second rotational).
- A linear (1^{st} order) component in the second function or plot indicates an Y offset error (corresponding to the component of the movement within the vertical plane from the first rotational position to the second rotational position).
- A quadratic (2^{nd} order) component in the first and second function or plot indicates Z (focal) offset error.
- A flat first and second function/plot indicates no X, Y and Z errors. In this case, the calculated observation angles and the actual observation angles are all equal.

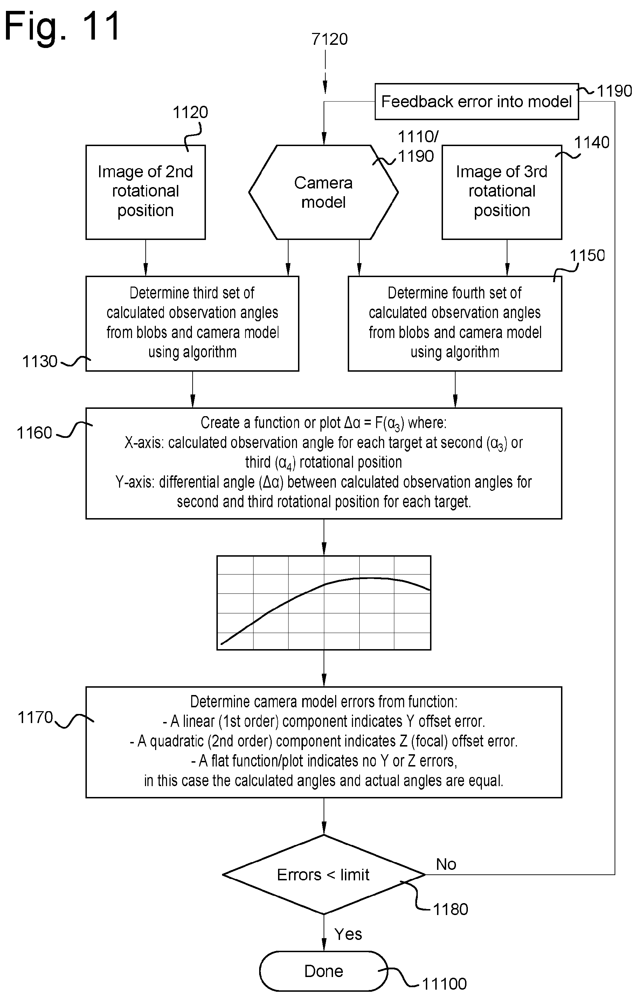

In other embodiments, where the camera is to be calibrated in the y-direction, after step 7100 where the camera model is deemed calibrated in the x-direction, the method for calibration may be continued as illustrated in figure 10 or 11. In this case, the camera model which resulted in the reaching of step 7100 may be used as input, i.e., initial camera model, in one of the flowcharts of Figure 10 or 11.

In the method illustrated further with the flowchart of Figure 10, the camera model is calibrated along the y-axis, following the calibration along the x-axis as shown in Figure 7. Once having reached step 7100 of Fig. 7, the camera is rotated substantially 90 degrees around its optical axis, and calibration continues as set out in the flow chart of Fig. 10. This flowchart essentially directly corresponds to the flowchart of Figure 7, the method repeated in the same way with the camera now rotated 90 degrees. This enables calibration of the camera along both the x- and y-axis using a one-dimensional target array, e.g. as illustrated in Figure 5.

In step 1010, an initial camera model is provided. This can be the camera model resulting from the method of the flowchart of Fig. 7.

In step 1020, the camera 7 is positioned in a third rotational position, P3, with respect to the targets 1, wherein a third image of the plurality of targets is recorded.

In step 1030, a third set of calculated observation angles is determined from the third image, using the camera model provided in step 1010. The third set of calculated observation angles comprises a third calculated observation angle of each target with respect to the camera, with the camera in the third rotational position.

In step 1040, the camera is moved to a fourth rotational position, e.g. position P4, analogous to the rotation from the first rotational position P1 to the second rotational position P2 as illustrated in Fig. 5. A fourth image of the plurality of targets is recorded with the camera in the fourth rotational position.

In step 1050, a fourth set of calculated observation angles is determined from the fourth image, using the camera model.

In step 1060, a function or plot is determined, based on the third and/or fourth set of calculated observation angles and a set of differential angles, the differential angles representing a difference between the third and fourth calculated observation angles for each target.

In step 1070, using the function or plot, camera model errors are determined, in a manner analogous to the method step 7070 described with reference to Fig. 7.

In step 1080, the camera model errors are compared to preset limits, representing acceptable camera model errors.

If the camera model errors are not within the preset limits, the camera model errors are fed back into the camera model, and an updated camera model is provided in step 9090. Subsequently, the algorithm, or flow chart, is re-iterated for steps 1030, 1050, 1060, 1070 and 1080. This re-iteration is performed until the resulting camera model errors are lower than the present limit.

If the camera model errors are smaller than the present limit, the camera model is determined to be acceptable, i.e., to be calibrated to sufficient accuracy, step 1100.

In a method according to another embodiment, illustrated further with the flowchart of Figure 11, the camera model is calibrated along the y-axis, following the calibration along the x-axis as shown in Figure 7. Once having reached step 7100 of Fig. 7, the camera is rotated with respect to the horizontal plane, i.e., rotated around the x-axis, step 1140, and calibration continues as set out in the flow chart of Fig. 11. In this method, a two-dimensional arrangement of targets, for example as illustrated in Fig. 8, is used.

In step 1110, an initial camera model is provided. This can be the camera model resulting from the method of the flowchart of Fig. 7.

In step 1120, the image previously recorded in the second rotational position is used to determine, in step 1130, a third set of calculated observation angles, the third set of calculated observation angles comprising an observation angle in respect of the y-axis for each target. Although this is illustrated in Fig. 11 as a separate step performed after the calibration along the x-axis, illustrated in Fig. 7, has been completed, the calculation of the third set of calculated observation angles may be performed simultaneously with the determination of the second set of calculated observation angles, step 7050, of Fig. 7.

In step 1140, the camera is moved from the second rotational position to a third rotational position by rotation around the x-axis, i.e., with respect to the horizontal plane. This can also be expressed as the camera being tilted slightly downwards, or upwards. The amount of rotation is preferably similar to that when moving from the first to the second rotational position. A third image of the plurality of targets is recorded with the camera in the fourth rotational position.

In step 1150, a fourth set of calculated observation angles is determined from the fourth image, using the camera model.

In step 1160, a function or plot is determined, based on the third and/or fourth set of calculated observation angles and a set of differential angles, the differential angles representing a difference between the third and fourth calculated observation angles for each target.

In step 1170, using the function or plot, camera model errors are determined, in a manner analogous to the method step 7070 described with reference to Fig. 7.

In step 1180, the camera model errors are compared to preset limits, representing acceptable camera model errors.

If the camera model errors are not within the preset limits, the camera model errors are fed back into the camera model, and an updated camera model is provided in step 1190. Subsequently, the algorithm, or flow chart, is re-iterated for steps 1130, 1150, 1160, 1170 and 1180. This re-iteration is performed until the resulting camera model errors are lower than the present limit.

If the camera model errors are smaller than the present limit, the camera model is determined to be acceptable, i.e., to be calibrated to sufficient accuracy, step 11100.

Hence, according to this method, the camera can be calibration in all three dimensions based on three recorded images, using a two-dimensional distribution of targets.

In the methods described herein above, the calibration is described as calibration of the camera model along the horizontal, or x-axis, being performed prior to calibration along the vertical, or y-axis. It should however be understood that the order is not essential, but that alternatively calibration might be performed first along the vertical axis and subsequently along the horizontal axis.

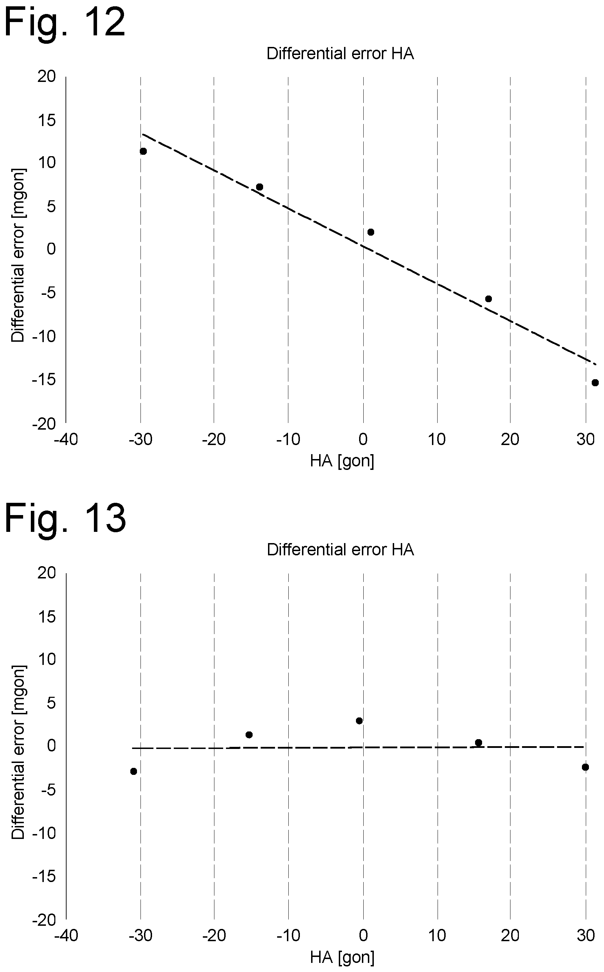

Figures 12-17 show plots of differential errors of the targets, simulated at different stages of calibrating a camera model in the three dimensions, x, y and z, according to methods described herein. This provides an illustration of the results of the calibration steps described herein. The calibration is simulated for both x-offset and y-offset.

The simulations were performed with settings and assumptions as follows:

The images were slightly noisy (intended to mimic images from a real camera).

All offsets (on x, y and z=focal distance) were set to 100 micrometers.

The rotation of the camera, to generate differential angles, was 1 gon.

For the horizontal measurements and calibration, 5 targets were placed on the horizon, roughly 15 gon apart from each other, one target located in the middle.

For the vertical measurements and calibration, 5 targets were placed so that they were viewed as being on a vertical line, all at a horizontal angle of circa 0 gon (in other words, in the middle of the field of view), roughly 10 gon apart from each other, and one in the middle.

The targets were placed at not perfect regular positions, to provide a realistic simulation of the calibration.

The results can be described as follows:

Figure 12 shows a plot of differential errors for each target 1-5 vs their respective calculated observation angle. Herein, before any calibration, differential horizontal angle errors are calculated from measured observed horizontal angles.

Figure 13 shows a plot of differential errors vs calculated observation angles after correction of x-offset to make the dashed trendline horizontal. The offset between the center of diffractive aperture and the (thus defined) center of the image sensor is practically compensated for along one axis, for example the x-axis. This axis is parallel with the sensor plane and practically parallel with the plane in which the targets and the camera are arranged.

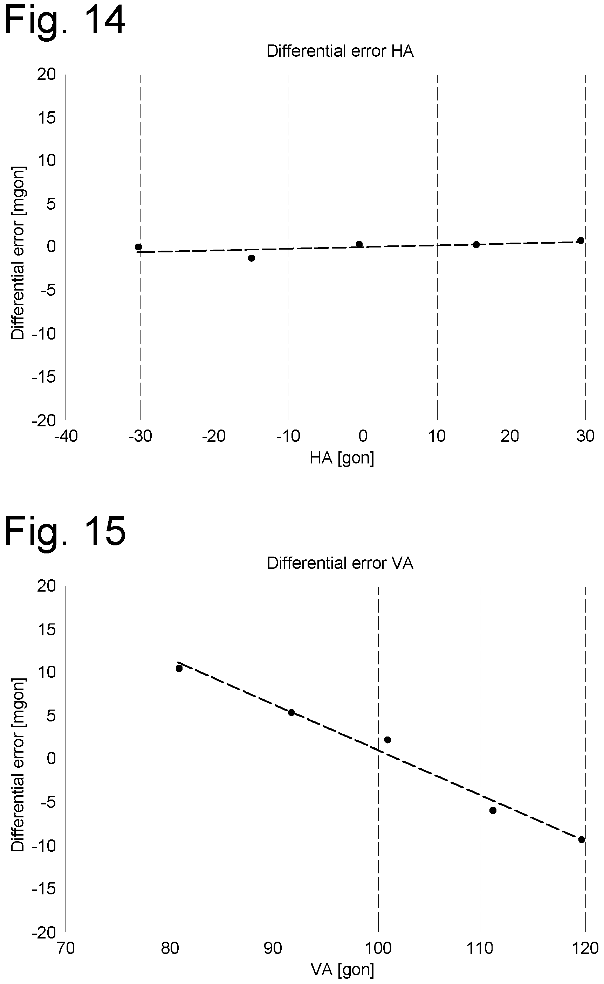

Figure 14 shows the plot after correction of also focal error, to make the imaginary curvature through the dots flat.

Figure 15 shows a plot of differential angles vs observation angles in the vertical direction, after horizontal calibration of figure 13. Herein, differential vertical angle errors were computed from measured observed vertical angles.

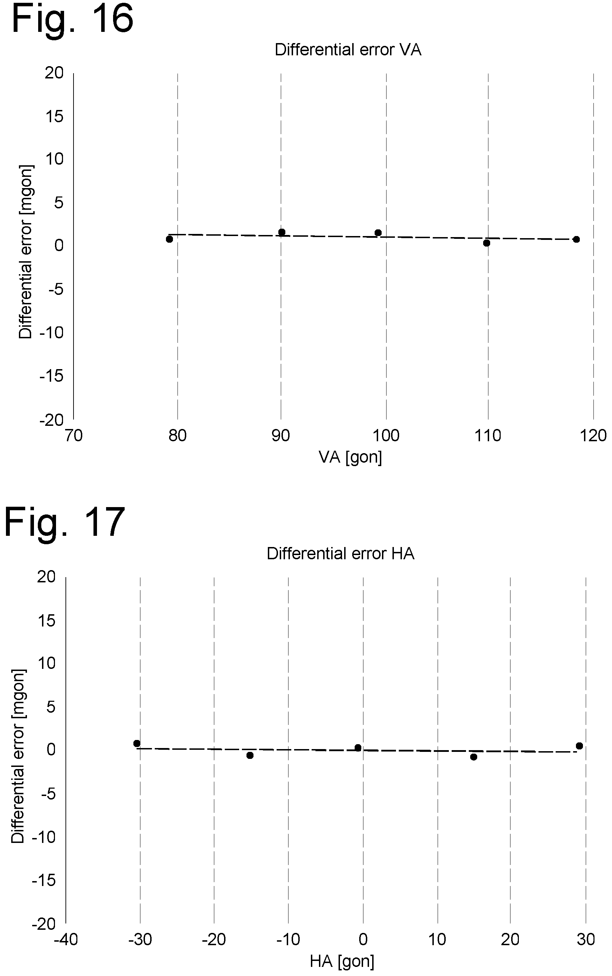

Figure 16 shows the plot with also the y offset compensated, to make the trendline horizontal.

Figure 17 shows the plot wherein, for verification, differential horizontal angle errors have been computed from measured observed horizontal angles again. As can be seen from comparison with the plot of figure 11, the plot is now substantially flat, having no first or second order components.

In this simulated case, the focal distance could have been adjusted a second time based on the measurements in the vertical plane, if this would have given a better trade-off between horizontal and vertical differential errors. However, as can be seen from fig. 17, this was not necessary in the simulated case, since already an acceptable focal offset calibration was achieved from the horizontal calibration.

Therefore, in summary, the present disclosure provides a method and a system enabling calibration of diffractive aperture based cameras for surveying and other computer vision purposes. The present disclosure provides different alternatives for realizing calibration of a camera model along three different dimensions, which can be performed using a simple arrangement of targets. Neither the exact location of the targets, nor the amount of rotation(s) of the camera, need be known.

It will be clear to a person skilled in the art that the scope of the invention is not limited to the examples discussed in the foregoing, but that several amendments and modifications thereof are possible without deviating from the scope of the invention as defined in the attached claims. While the invention has been illustrated and described in detail in the figures and the description, such illustration and description are to be considered illustrative or exemplary only, and not restrictive. The present invention is not limited to the disclosed embodiments but comprises any combination of the disclosed embodiments that can come to an advantage.

Variations to the disclosed embodiments can be understood and effected by a person skilled in the art in practicing the claimed invention, from a study of the figures, the description and the attached claims. Features of the above described embodiments and aspects can be combined unless their combining results in evident technical conflicts.

## Claims

1. Method of calibrating a camera (7) of a computer vision system, the camera comprising an image sensor (120) and a diffractive aperture (101) arranged for projecting light onto the image sensor (120), the method comprising the steps:
(a) distributing a plurality of targets (1) within a field of view of the camera;
(b) providing (7010) a camera model representing a mathematical model of the camera (7);
(c) positioning (7020) the camera (7) in a first rotational position (P1) with respect to the targets and recording a first image of the plurality of targets with the camera in the first rotational position;
(d) determining (7030) a first set of calculated observation angles from the first image using the camera model, the first set of calculated observation angles comprising a first calculated observation angle of each target with respect to the camera;
(e) rotating (7040) the camera (7) into a second rotational position (P2) with respect to the targets and recording a second image of the plurality of targets with the camera in the second rotational position;
(f) determining (7050) a second set of calculated observation angles from the second image using the camera model, the second set of calculated observation angles comprising a second calculated observation angle of each target with respect to the camera; **characterized in that** the method further comprises:
(g) determining (7060) a function or plot based on the first and/or second set of calculated observation angles and a set of differential angles, the differential angles representing a difference between the first and second calculated observation angles for each target;
(h) determining (7070) camera model errors from the function or plot;
(i) comparing (7080) the camera model errors to a predefined limit;
(j) if the camera model errors are lower than the limit, determining (7100) the camera model as being acceptable;
(k) if the camera model errors are not lower than the limit, calculating (7090) an updated camera model based on the camera model errors, and repeating steps d), f), g), h), i) and j) or k) based on the updated camera model.

2. The method according to claim 1, further comprising:
- once the camera model has been determined as being acceptable, rotating the camera (7) substantially 90 degrees around its optical axis; and
- repeating steps c) to k).

3. The method according to claim 2, wherein at least a portion of the plurality of targets (1) are arranged in a substantially one-dimensional row as seen from the camera, the one-dimensional row and the camera being located substantially within one plane.

4. The method according to claim 3, wherein the step (f) of rotating the camera (7) from the first rotational position to the second rotational position is performed substantially within said plane.

5. The method according to claim 1, wherein the plurality of targets (1) are arranged in a two dimensional arrangement as seen from the camera, and wherein the step (f) of rotating the camera from the first rotational position to the second rotational position comprises a rotation within a horizontal plane and a rotation within a vertical plane.

6. The method according to claim 1, wherein the plurality of targets (1) are arranged in a two dimensional arrangement as seen from the camera, and
wherein the step (f) of rotating the camera (7) from the first rotational position to the second rotational position is performed substantially within a horizontal plane, around a first axis extending through a plane of the aperture and extending substantially perpendicular to the horizontal plane, and the first and second calculated observation angles representing angles within the horizontal plane;
the method further comprising:
(l) determining (1130) a third set of calculated observation angles from the second image using the camera model, the third set of calculated observation angles comprising a third calculated observation angle of each target with respect to the camera, the third calculated observation angles representing angles in a direction substantially perpendicular to the horizontal plane;
wherein once the camera model has been determined as being acceptable in step (j), the method further comprising the steps:
(m) rotating (1140) the camera around a second axis passing through its aperture, the second axis being substantially perpendicular to the first axis and extending within the horizontal plane, thereby rotating the camera into a third rotational position;
(n) recording a third image of the plurality of targets with the camera in the third rotational position;
(o) determining (1150) a fourth set of calculated observation angles from the third image using the camera model, the fourth set of calculated observation angles comprising a fourth calculated observation angle of each target with respect to the camera;
(p) determining (1160) a second function or plot based on the third and/or fourth set of calculated observation angles and a set of second differential angles, the second differential angles representing a difference between the third and fourth calculated observation angles for each target; and
(q) determining (1170) second camera model errors from the second function or plot;
(r) comparing (1180) the second camera model errors to a second predefined limit;
(s) if the second camera model errors are lower than the second limit, determining (11100) the camera model as being acceptable;
(t) if the second camera model errors are not lower than the second limit, calculating (1190) an updated camera model based on the second camera model errors, and repeating steps (l), (o)-(r) and (s) or (t) based on the updated camera model.

7. The method according to any one of the preceding claims, wherein step (a) comprises arranging the plurality of targets such that a target is arranged at each lateral periphery of a field of view of said camera, and any remaining targets of said plurality of targets are substantially uniformly distributed between the targets arranged at a lateral periphery.

8. The method according to any one of the preceding claims, further comprising:
(h1) determining calibration parameters as corrections to be applied to parameters representing the mathematical model of the camera, wherein the calibration parameters are determined such that the differential angle is substantially equal for each target.

9. The method according to any one of the preceding claims, wherein the camera model comprises as parameters:
three-dimensional positions of pixels of the image sensor relative to the diffractive aperture.

10. The method according to any one of the preceding claims, wherein the method is performed while doing real measurements using the computer vision system.

11. The method according to any one of the preceding claims, further comprising:
bringing the camera to a second temperature, and repeating steps of any one of the preceding claims at the second temperature.

12. System (100) for calibrating a camera (7) of a computer vision system, the camera (7) comprising an image sensor (120) and a diffractive aperture (101) arranged for projecting incoming light onto the image sensor, the system comprising:
a plurality of targets (1) to be observed by the camera;
a mounting device for mounting the camera, such that the plurality of targets (1) are in a field of view of the camera when the camera is mounted on the mounting device, the mounting device enabling rotation of the camera between a first rotational position (P1) and a second rotational position (P2) with respect to the plurality of targets (1); and
one or more processors (190) configured to:
(b) provide a camera model representing a mathematical model of a camera;
(c) record a first image of the plurality of targets with the camera in the first rotational position;
(d) determine a first set of calculated observation angles from the first image using the camera model, the first set of calculated observation angles comprising a first calculated observation angle of each target with respect to the camera;
(e) record a second image of the plurality of targets with the camera in a second rotational position;
(f) determine a second set of calculated observation angles from the second image using the camera model, the second set of calculated observation angles comprising a second calculated observation angle of each target with respect to the camera;
**characterized in that** the one or more processors (190) are further configured to:
(g) determine a function or plot based on the first and/or second set of calculated observation angles and a set of differential angles, the differential angles representing a difference between the first and second calculated observation angles for each target;
(h) determine camera model errors from the function or plot;
(i) compare the camera model errors to a predetermined limit;
(j) if the camera model errors are lower than the limit, determine the camera model as being acceptable;
(k) if the camera model errors are not lower than the limit, calculate an updated camera model based on the camera model errors, and repeat steps d), f), g), h), i) and j) or k) based on the updated camera model.

13. The system according to claim 12, wherein the mounting device comprises a microprocessor controlled rotation device.

14. The system according to claim 12 or 13, wherein the mounting device is configured to enable rotation of the camera around a vertical axis and/or a horizontal axis.

15. A computer program product comprising instructions which, when executed by a computer, causes the computer to perform the steps of:
(b) providing a camera model representing a mathematical model of a camera comprising an image sensor and a diffractive aperture arranged for projecting incoming light onto the image sensor;
(d) from a first image of a plurality of targets, recorded with the camera in a first rotational position with respect to the targets, determining a first set of calculated observation angles from the first image using the camera model, the first set of calculated observation angles comprising a first calculated observation angle of each target with respect to the camera;
(f) from a second image of the plurality of targets with the camera in a second rotational position, determining a second set of calculated observation angles from the second image using the camera model, the second set of calculated observation angles comprising a second calculated observation angle of each target with respect to the camera;
**characterized in** further causing the computer to perform the steps of:
(g) determining a function based on the first and/or second set of calculated observation angles and a set of differential angles, the differential angles representing a difference between the first and second calculated observation angles for each target;
(h) determining camera model errors from the function;
(i) comparing the camera model errors to a predetermined limit;
(j) if the camera model errors are lower than the limit, determining the camera model as being acceptable;
(k) if the camera model errors are not lower than the limit, calculating an updated camera model based on the camera model errors, and repeating steps d), f), g), h), i) and j) or k) based on the updated camera model.

## Patentansprüche

1. Verfahren zum Kalibrieren einer Kamera (7) eines Computer-Vision-Systems, wobei die Kamera einen Bildsensor (120) und eine diffraktive Blende (101) umfasst, die zum Projizieren von Licht auf den Bildsensor (120) angeordnet ist, wobei das Verfahren die folgenden Schritte umfasst:
(a) Verteilen mehrerer Ziele (1) innerhalb eines Sichtfeldes der Kamera;
(b) Bereitstellen (7010) eines Kameramodells, das ein mathematisches Modell der Kamera (7) repräsentiert;
(c) Positionieren (7020) der Kamera (7) in einer ersten Drehposition (P1) mit Bezug auf die Ziele und Aufzeichnen eines ersten Bildes der mehreren Ziele mit der Kamera in der ersten Drehposition;
(d) Bestimmen (7030) eines ersten Satzes von berechneten Beobachtungswinkeln aus dem ersten Bild unter Verwendung des Kameramodells, wobei der erste Satz von berechneten Beobachtungswinkeln einen ersten berechneten Beobachtungswinkel jedes Ziels mit Bezug auf die Kamera umfasst;
(e) Drehen (7040) der Kamera (7) in eine zweite Drehposition (P2) mit Bezug auf die Ziele und Aufzeichnen eines zweiten Bildes der mehreren Ziele mit der Kamera in der zweiten Drehposition;
(f) Bestimmen (7050) eines zweiten Satzes von berechneten Beobachtungswinkeln aus dem zweiten Bild unter Verwendung des Kameramodells, wobei der zweite Satz von berechneten Beobachtungswinkeln einen zweiten berechneten Beobachtungswinkel jedes Ziels mit Bezug auf die Kamera umfasst; **dadurch gekennzeichnet, dass** das Verfahren ferner Folgendes umfasst:
(g) Bestimmen (7060) einer Funktion oder eines Diagramms basierend auf dem ersten und/oder zweiten Satz von berechneten Beobachtungswinkeln und einem Satz von Differenzwinkeln, wobei die Differenzwinkel eine Differenz zwischen dem ersten und dem zweiten berechneten Beobachtungswinkel für jedes Ziel repräsentieren;
(h) Bestimmen (7070) von Kameramodellfehlern aus der Funktion oder dem Diagramm;
(i) Vergleichen (7080) der Kameramodellfehler mit einer vordefinierten Grenze;
(j) falls die Kameramodellfehler unter der Grenze liegen, Bestimmen (7100) des Kameramodells als akzeptabel;
(k) falls die Kameramodellfehler nicht unter der Grenze liegen, Berechnen (7090) eines aktualisierten Kameramodells basierend auf den Kameramodellfehlern, und Wiederholen der Schritte d), f), g), h), i) und j) oder k) basierend auf dem aktualisierten Kameramodell.

2. Verfahren nach Anspruch 1, ferner umfassend:
- sobald das Kameramodell als akzeptabel bestimmt wurde, Drehen der Kamera (7) um im Wesentlichen 90 Grad um ihre optische Achse; und
- Wiederholen der Schritte c) bis k).

3. Verfahren nach Anspruch 2, wobei mindestens ein Teil der mehreren Ziele (1), von der Kamera aus gesehen, in einer im Wesentlichen eindimensionalen Reihe angeordnet werden, wobei sich die eindimensionale Reihe und die Kamera im Wesentlichen in einer Ebene befinden.

4. Verfahren nach Anspruch 3, wobei der Schritt (f) des Drehens der Kamera (7) von der ersten Drehposition in die zweite Drehposition im Wesentlichen in der Ebene durchgeführt wird.

5. Verfahren nach Anspruch 1, wobei die mehreren Ziele (1), von der Kamera aus gesehen, in einer zweidimensionalen Anordnung angeordnet werden, und wobei der Schritt (f) des Drehens der Kamera von der ersten Drehposition in die zweite Drehposition eine Drehung in einer horizontalen Ebene und eine Drehung in einer vertikalen Ebene umfasst.

6. Verfahren nach Anspruch 1, wobei die mehreren Ziele (1), von der Kamera aus gesehen, in einer zweidimensionalen Anordnung angeordnet werden, und wobei der Schritt (f) des Drehens der Kamera (7) von der ersten Drehposition in die zweite Drehposition im Wesentlichen in einer horizontalen Ebene um eine erste Achse durchgeführt wird, die sich durch eine Ebene der Blende erstreckt und sich im Wesentlichen senkrecht zu der horizontalen Ebene erstreckt, und wobei die ersten und zweiten berechneten Beobachtungswinkel Winkel in der horizontalen Ebene repräsentieren;
wobei das Verfahren ferner Folgendes umfasst:
(l) Bestimmen (1130) eines dritten Satzes von berechneten Beobachtungswinkeln aus dem zweiten Bild unter Verwendung des Kameramodells, wobei der dritte Satz von berechneten Beobachtungswinkeln einen dritten berechneten Beobachtungswinkel jedes Ziels mit Bezug auf die Kamera umfasst, wobei die dritten berechneten Beobachtungswinkel Winkel in einer Richtung im Wesentlichen senkrecht zu der horizontalen Ebene repräsentieren;
wobei, sobald das Kameramodell in Schritt (j) als akzeptabel bestimmt wurde, das Verfahren ferner die folgenden Schritte umfasst:
(m) Drehen (1140) der Kamera um eine zweite Achse, die durch ihre Blende verläuft, wobei die zweite Achse im Wesentlichen senkrecht zu der ersten Achse ist und sich in der horizontalen Ebene erstreckt, wodurch die Kamera in eine dritte Drehposition gedreht wird;
(n) Aufzeichnen eines dritten Bildes der mehreren Ziele mit der Kamera in der dritten Drehposition;
(o) Bestimmen (1150) eines vierten Satzes von berechneten Beobachtungswinkeln aus dem dritten Bild unter Verwendung des Kameramodells, wobei der vierte Satz von berechneten Beobachtungswinkeln einen vierten berechneten Beobachtungswinkel jedes Ziels mit Bezug auf die Kamera umfasst;
(p) Bestimmen (1160) einer zweiten Funktion oder eines zweiten Diagramms basierend auf dem dritten und/oder vierten Satz von berechneten Beobachtungswinkeln und einem Satz zweiter Differenzwinkel, wobei die zweiten Differenzwinkel eine Differenz zwischen den dritten und vierten berechneten Beobachtungswinkeln für jedes Ziel repräsentieren; und
(q) Bestimmen (1170) von zweiten Kameramodellfehlern aus der zweiten Funktion oder dem zweiten Diagramm;
(r) Vergleichen (1180) der zweiten Kameramodellfehler mit einer zweiten vordefinierten Grenze;
(s) falls die zweiten Kameramodellfehler unter der zweiten Grenze liegen, Bestimmen (11100) des Kameramodells als akzeptabel;
(t) falls die zweiten Kameramodellfehler nicht unter der zweiten Grenze liegen, Berechnen (1190) eines aktualisierten Kameramodells basierend auf den zweiten Kameramodellfehlern, und Wiederholen der Schritte (1), (o)-(r) und (s) oder (t) basierend auf dem aktualisierten Kameramodell.

7. Verfahren nach einem der vorhergehenden Ansprüche, wobei Schritt (a) Anordnen der mehreren Ziele derart, dass ein Ziel an jedem lateralen Umfang eines Sichtfelds der Kamera angeordnet ist und beliebige verbleibende Ziele der mehreren Ziele im Wesentlichen gleichmäßig zwischen den an einem lateralen Umfang angeordneten Zielen verteilt sind, umfasst.

8. Verfahren nach einem der vorhergehenden Ansprüche, ferner umfassend:
(h1) Bestimmen von Kalibrierungsparametern als Korrekturen, die auf Parameter anzuwenden sind, die das mathematische Modell der Kamera repräsentieren, wobei die Kalibrierungsparameter derart bestimmt werden, dass der Differenzwinkel für jedes Ziel im Wesentlichen gleich ist.

9. Verfahren nach einem der vorhergehenden Ansprüche, wobei das Kameramodell als Parameter Folgendes umfasst: dreidimensionale Positionen von Pixeln des Bildsensors relativ zu der diffraktiven Blende.

10. Verfahren nach einem der vorhergehenden Ansprüche, wobei das Verfahren durchgeführt wird, während reale Messungen unter Verwendung des Computer-Vision-Systems durchgeführt werden.

11. Verfahren nach einem der vorhergehenden Ansprüche, ferner umfassend:
Bringen der Kamera auf eine zweite Temperatur, und Wiederholen der Schritte nach einem der vorhergehenden Ansprüche bei der zweiten Temperatur.

12. System (100) zum Kalibrieren einer Kamera (7) eines Computer-Vision-Systems, wobei die Kamera (7) einen Bildsensor (120) und eine diffraktive Blende (101) umfasst, die zum Projizieren von einfallendem Licht auf den Bildsensor angeordnet ist, wobei das System Folgendes umfasst:
mehrere Ziele (1), die von der Kamera zu beobachten sind; eine Montagevorrichtung zum Montieren der Kamera derart, dass sich die mehreren Ziele (1) in einem Sichtfeld der Kamera befinden, wenn die Kamera an der Montagevorrichtung montiert ist, wobei die Montagevorrichtung eine Drehung der Kamera zwischen einer ersten Drehposition (P1) und einer zweiten Drehposition (P2) mit Bezug auf die mehreren Ziele (1) ermöglicht; und einen oder mehrere Prozessoren (190), die zu Folgendem konfiguriert sind:
(b) Bereitstellen eines Kameramodells, das ein mathematisches Modell einer Kamera repräsentiert;
(c) Aufzeichnen eines ersten Bildes der mehreren Ziele mit der Kamera in der ersten Drehposition;
(d) Bestimmen eines ersten Satzes von berechneten Beobachtungswinkeln aus dem ersten Bild unter Verwendung des Kameramodells, wobei der erste Satz von berechneten Beobachtungswinkeln einen ersten berechneten Beobachtungswinkel jedes Ziels mit Bezug auf die Kamera umfasst;
(e) Aufzeichnen eines zweiten Bildes der mehreren Ziele mit der Kamera in einer zweiten Drehposition;
(f) Bestimmen eines zweiten Satzes von berechneten Beobachtungswinkeln aus dem zweiten Bild unter Verwendung des Kameramodells, wobei der zweite Satz von berechneten Beobachtungswinkeln einen zweiten berechneten Beobachtungswinkel jedes Ziels mit Bezug auf die Kamera umfasst;
**dadurch gekennzeichnet, dass** der eine oder die mehreren Prozessoren (190) ferner zu Folgendem konfiguriert sind:
(g) Bestimmen einer Funktion oder eines Diagramms basierend auf dem ersten und/oder zweiten Satz von berechneten Beobachtungswinkeln und einem Satz von Differenzwinkeln, wobei die Differenzwinkel eine Differenz zwischen den ersten und zweiten berechneten Beobachtungswinkeln für jedes Ziel repräsentieren;
(h) Bestimmen von Kameramodellfehlern aus der Funktion oder dem Diagramm;
(i) Vergleichen der Kameramodellfehler mit einer vorbestimmten Grenze;
(j) falls die Kameramodellfehler unter der Grenze liegen, Bestimmen des Kameramodells als akzeptabel;
(k) falls die Kameramodellfehler nicht unter der Grenze liegen, Berechnen eines aktualisierten Kameramodells basierend auf den Kameramodellfehlern, und Wiederholen der Schritte d), f), g), h), i) und j) oder k) basierend auf dem aktualisierten Kameramodell.

13. System nach Anspruch 12, wobei die Montagevorrichtung eine mikroprozessorgesteuerte Drehvorrichtung umfasst.

14. System nach Anspruch 12 oder 13, wobei die Montagevorrichtung dazu konfiguriert ist, eine Drehung der Kamera um eine vertikale Achse und/oder eine horizontale Achse zu ermöglichen.

15. Computerprogrammprodukt, das Anweisungen umfasst, die bei Ausführung durch einen Computer den Computer veranlassen, die folgenden Schritte durchzuführen:
(b) Bereitstellen eines Kameramodells, das ein mathematisches Modell einer Kamera repräsentiert, die einen Bildsensor und eine diffraktive Blende umfasst, die zum Projizieren von einfallendem Licht auf den Bildsensor angeordnet ist;
(d) aus einem ersten Bild von mehreren Zielen, das mit der Kamera in einer erste Drehposition mit Bezug auf die Ziele aufgenommen wurde, Bestimmen eines ersten Satzes von berechneten Beobachtungswinkeln aus dem ersten Bild unter Verwendung des Kameramodells, wobei der erste Satz von berechneten Beobachtungswinkeln einen ersten berechneten Beobachtungswinkel jedes Ziels mit Bezug auf die Kamera umfasst;
(f) aus einem zweiten Bild der mehreren Ziele mit der Kamera in einer zweiten Drehposition, Bestimmen eines zweiten Satzes von berechneten Beobachtungswinkeln aus dem zweiten Bild unter Verwendung des Kameramodells, wobei der zweite Satz von berechneten Beobachtungswinkeln einen zweiten berechneten Beobachtungswinkel jedes Ziels mit Bezug auf die Kamera umfasst;
**gekennzeichnet durch** ferner Veranlassen des Computers, die folgenden Schritte durchzuführen:
(g) Bestimmen einer Funktion basierend auf dem ersten und/oder zweiten Satz von berechneten Beobachtungswinkeln und einem Satz von Differenzwinkeln, wobei die Differenzwinkel eine Differenz zwischen den ersten und zweiten berechneten Beobachtungswinkeln für jedes Ziel repräsentieren;
(h) Bestimmen von Kameramodellfehlern aus der Funktion;
(i) Vergleichen der Kameramodellfehler mit einer vorbestimmten Grenze;
(j) falls die Kameramodellfehler unter der Grenze liegen, Bestimmen des Kameramodells als akzeptabel;
(k) falls die Kameramodellfehler nicht unter der Grenze liegen, Berechnen eines aktualisierten Kameramodells basierend auf den Kameramodellfehlern, und Wiederholen der Schritte d), f), g), h), i) und j) oder k) basierend auf dem aktualisierten Kameramodell.

## Revendications

1. Procédé d'étalonnage d'une caméra (7) d'un système de vision par ordinateur, la caméra comprenant un capteur d'image (120) et une ouverture diffractive (101) agencée pour projeter de la lumière sur le capteur d'image (120), le procédé comprenant les étapes suivantes :
(a) la répartition d'une pluralité de cibles (1) à l'intérieur d'un champ de vision de la caméra ;
(b) la fourniture (7010) d'un modèle de caméra représentant un modèle mathématique de la caméra (7) ;
(c) le positionnement (7020) de la caméra (7) dans une première position de rotation (P1) par rapport aux cibles et l'enregistrement d'une première image de la pluralité de cibles avec la caméra dans la première position de rotation ;
(d) la détermination (7030) d'un premier ensemble d'angles d'observation calculés à partir de la première image à l'aide du modèle de caméra, le premier ensemble d'angles d'observation calculés comprenant un premier angle d'observation calculé de chaque cible par rapport à la caméra ;
(e) la rotation (7040) de la caméra (7) dans une deuxième position de rotation (P2) par rapport aux cibles et l'enregistrement d'une deuxième image de la pluralité de cibles avec la caméra dans la deuxième seconde de rotation ;
(f) la détermination (7050) d'un deuxième ensemble d'angles d'observation calculés à partir de la deuxième image à l'aide du modèle de caméra, le deuxième ensemble d'angles d'observation calculés comprenant un deuxième angle d'observation calculé de chaque cible par rapport à la caméra ; **caractérisé en ce que** le procédé comprend en outre :
(g) la détermination (7060) d'une fonction ou d'un tracé sur la base du premier et/ou du deuxième ensemble d'angles d'observation calculés et d'un ensemble d'angles différentiels, les angles différentiels représentant une différence entre les premier et deuxième angles d'observation calculés pour chaque cible ;
(h) la détermination (7070) d'erreurs de modèle de caméra à partir de la fonction ou du tracé ;
(i) la comparaison (7080) des erreurs de modèle de caméra à une limite prédéfinie ;
(j) si les erreurs de modèle de caméra sont inférieures à la limite, la détermination (7100) que le modèle de caméra est acceptable ;
(k) si les erreurs de modèle de caméra ne sont pas inférieures à la limite, le calcul (7090) d'un modèle de caméra mis à jour sur la base des erreurs de modèle de caméra, et la répétition des étapes d), f), g), h), i) et j) ou k) sur la base du modèle de caméra mis à jour.

2. Procédé selon la revendication 1, comprenant en outre :
- une fois le modèle de caméra déterminé comme acceptable, la rotation de la caméra (7) de sensiblement 90 degrés autour de son axe optique ; et
- la répétition des étapes c) à k).

3. Procédé selon la revendication 2, dans lequel au moins une partie de la pluralité de cibles (1) sont agencées en une rangée sensiblement unidimensionnelle vue de la caméra, la rangée unidimensionnelle et la caméra étant situées sensiblement dans un plan.

4. Procédé selon la revendication 3, dans lequel l'étape (f) de rotation de la caméra (7) de la première position de rotation à la deuxième position de rotation est effectuée sensiblement dans ledit plan.

5. Procédé selon la revendication 1, dans lequel la pluralité de cibles (1) sont agencées en un agencement bidimensionnel vu de la caméra, et dans lequel l'étape (f) de rotation de la caméra de la première position de rotation à la deuxième position de rotation comprend une rotation à l'intérieur d'un plan horizontal et une rotation à l'intérieur d'un plan vertical.

6. Procédé selon la revendication 1, dans lequel la pluralité de cibles (1) sont agencées en un agencement bidimensionnel vu de la caméra, et
dans lequel l'étape (f) de rotation de la caméra (7) de la première position de rotation à la deuxième position de rotation est effectuée sensiblement dans un plan horizontal, autour d'un premier axe s'étendant à travers un plan de l'ouverture et s'étendant sensiblement perpendiculairement au plan horizontal, et les premier et deuxième angles d'observation calculés représentant des angles à l'intérieur du plan horizontal ;
le procédé comprenant en outre :
(l) la détermination (1130) d'un troisième ensemble d'angles d'observation calculés à partir de la deuxième image à l'aide du modèle de caméra, le troisième ensemble d'angles d'observation calculés comprenant un troisième angle d'observation calculé de chaque cible par rapport à la caméra, les troisièmes angles d'observation calculés représentant des angles dans une direction sensiblement perpendiculaire au plan horizontal ;
dans lequel une fois le modèle de caméra déterminé comme étant accessible à l'étape (j), le procédé comprend en outre les étapes suivantes :
(m) la rotation (1140) de la caméra autour d'un second axe passant à travers son ouverture, le second axe étant sensiblement perpendiculaire au premier axe et s'étendant à l'intérieur du plan horizontal, ce qui permet la rotation de la caméra dans une troisième position de rotation ;
(n) l'enregistrement d'une troisième image de la pluralité de cibles avec la caméra dans la troisième position de rotation ;
(o) la détermination (1150) d'un quatrième ensemble d'angles d'observation calculés à partir de la troisième image à l'aide du modèle de caméra, le quatrième ensemble d'angles d'observation calculés comprenant un quatrième angle d'observation calculé de chaque cible par rapport à la caméra ;
(p) la détermination (1160) d'une seconde fonction ou d'un second tracé sur la base du troisième et/ou du quatrième ensemble d'angles d'observation calculés et d'un second ensemble d'angles différentiels, les seconds angles différentiels représentant une différence entre les troisième et quatrième angles d'observation calculés pour chaque cible ; et
(q) la détermination (1170) de secondes erreurs de modèle de caméra à partir de la seconde fonction ou du second tracé ;
(r) la comparaison (1180) des secondes erreurs de modèle de caméra à une seconde limite prédéfinie ;
(s) si les secondes erreurs de modèle de caméra sont inférieures à la seconde limite, la détermination (11100) que le modèle de caméra est acceptable ;
(t) si les secondes erreurs de modèle de caméra ne sont pas inférieures à la limite, le calcul (1190) d'un modèle de caméra mis à jour sur la base des secondes erreurs de modèle de caméra, et la répétition des étapes (l), (o) à (r) et (s) ou (t) sur la base du modèle de caméra mis à jour.

7. Procédé selon l'une quelconque des revendications précédentes, dans lequel l'étape (a) comprend l'agencement de la pluralité de cibles de telle sorte qu'une cible est disposée à chaque périphérie latérale d'un champ de vision de ladite caméra, et toute cible restante de ladite pluralité de cibles est sensiblement uniformément répartie entre les cibles disposées à une périphérie latérale.

8. Procédé selon l'une quelconque des revendications précédentes, comprenant en outre :
(h1) la détermination de paramètres d'étalonnage en tant que corrections à appliquer à des paramètres représentant le modèle mathématique de la caméra, dans lequel les paramètres d'étalonnage sont déterminés de telle sorte que l'angle différentiel est sensiblement égal pour chaque cible.

9. Procédé selon l'une quelconque des revendications précédentes, dans lequel le modèle de caméra comprend en tant que paramètres :
des positions tridimensionnelles de pixels du capteur d'image par rapport à l'ouverture diffractive.

10. Procédé selon l'une quelconque des revendications précédentes, dans lequel le procédé est effectué tout en réalisant des mesures réelles à l'aide du système de vision par ordinateur.

11. Procédé selon l'une quelconque des revendications précédentes, comprenant en outre :
le placement de la caméra à une seconde température, et la répétition des étapes de l'une quelconque des revendications précédentes à la seconde température.

12. Système (100) d'étalonnage d'une caméra (7) d'un système de vision par ordinateur, la caméra (7) comprenant un capteur d'image (120) et une ouverture diffractive (101) agencée pour projeter une lumière entrante sur le capteur d'image, le système comprenant :
une pluralité de cibles (1) à observer par la caméra ;
un dispositif de montage pour monter la caméra, de telle sorte que la pluralité de cibles (1) sont dans un champ de vision de la caméra lorsque la caméra est montée sur le dispositif de montage, le dispositif de montage permettant la rotation de la caméra entre une première position de rotation (P1) et une deuxième position de rotation (P2) par rapport à la pluralité de cibles (1) ; et
un ou plusieurs processeurs (190) configurés pour :
(b) fournir un modèle de caméra représentant un modèle mathématique d'une caméra ;
(c) enregistrer une première image de la pluralité de cibles avec la caméra dans la première position de rotation ;
(d) déterminer un premier ensemble d'angles d'observation calculés à partir de la première image à l'aide du modèle de caméra, le premier ensemble d'angles d'observation calculés comprenant un premier angle d'observation calculé de chaque cible par rapport à la caméra ;
(e) enregistrer une deuxième image de la pluralité de cibles avec la caméra dans une deuxième position de rotation ;
(f) déterminer un deuxième ensemble d'angles d'observation calculés à partir de la deuxième image à l'aide du modèle de caméra, le deuxième ensemble d'angles d'observation calculés comprenant un deuxième angle d'observation calculé de chaque cible par rapport à la caméra ;
**caractérisé en ce que** le ou les processeurs (190) sont en outre configurés pour :
(g) déterminer une fonction ou un tracé sur la base du premier et/ou du deuxième ensemble d'angles d'observation calculés et d'un ensemble d'angles différentiels, les angles différentiels représentant une différence entre les premier et deuxième angles d'observation calculés pour chaque cible ;
(h) déterminer des erreurs de modèle de caméra à partir de la fonction ou du tracé ;
(i) comparer les erreurs de modèle de caméra à une limite prédéterminée ;
(j) si les erreurs de modèle de caméra sont inférieures à la limite, déterminer que le modèle de caméra est acceptable ;
(k) si les erreurs de modèle de caméra ne sont pas inférieures à la limite, calculer un modèle de caméra mis à jour sur la base des erreurs de modèle de caméra, et répéter les étapes d), f), g), h), i) et j) ou k) sur la base du modèle de caméra mis à jour.

13. Système selon la revendication 12, dans lequel le dispositif de montage comprend un dispositif de rotation commandé par un microprocesseur.

14. Système selon la revendication 12 ou 13, dans lequel le dispositif de montage est conçu pour permettre la rotation de la caméra autour d'un axe vertical et/ou d'un axe horizontal.

15. Produit de programme informatique comprenant des instructions qui, lorsqu'elles sont exécutées par un ordinateur, amènent l'ordinateur à exécuter les étapes suivantes :
(b) la fourniture d'un modèle de caméra représentant un modèle mathématique d'une caméra comprenant un capteur d'image et une ouverture diffractive agencée pour projeter une lumière entrante sur le capteur d'image ;
(d) à partir d'une première image d'une pluralité de cibles, enregistrée avec la caméra dans une première position de rotation par rapport aux cibles, la détermination d'un premier ensemble d'angles d'observation calculés à partir de la première image à l'aide du modèle de caméra, le premier ensemble d'angles d'observation calculés comprenant un premier angle d'observation calculé de chaque cible par rapport à la caméra ;
(f) à partir d'une deuxième image de la pluralité de cibles avec la caméra dans une deuxième position de rotation, la détermination d'un deuxième ensemble d'angles d'observation calculés à partir de la deuxième image à l'aide du modèle de caméra, le deuxième ensemble d'angles d'observation calculés comprenant un deuxième angle d'observation calculé de chaque cible par rapport à la caméra ;
**caractérisé en ce qu'**elles amènent en outre l'ordinateur à exécuter les étapes suivantes :
(g) la détermination d'une fonction sur la base du premier et/ou du deuxième ensemble d'angles d'observation calculés et d'un ensemble d'angles différentiels, les angles différentiels représentant une différence entre les premier et deuxième angles d'observation calculés pour chaque cible ;
(h) la détermination d'erreurs de modèle de caméra à partir de la fonction ;
(i) la comparaison des erreurs de modèle de caméra à une limite prédéterminée ;
(j) si les erreurs de modèle de caméra sont inférieures à la limite, la détermination que le modèle de caméra est acceptable ;
(k) si les erreurs de modèle de caméra ne sont pas inférieures à la limite, le calcul d'un modèle de caméra mis à jour sur la base des erreurs de modèle de caméra, et la répétition des étapes d), f), g), h), i) et j) ou k) sur la base du modèle de caméra mis à jour.
